(19) **Europäisches Patentamt European Patent Office Office européen des brevets**

(11) **EP 4 633 143 A1**

(12) **EUROPEAN PATENT APPLICATION**

(43) Date of publication:
**15.10.2025 Bulletin 2025/42**

(21) Application number: **24305558.9**

(22) Date of filing: **08.04.2024**

(51) International Patent Classification (IPC):
**H04N 19/11** (2014.01) **H04N 19/593** (2014.01)
**H04N 19/105** (2014.01) **H04N 19/159** (2014.01)
**H04N 19/176** (2014.01)

(52) Cooperative Patent Classification (CPC):
**H04N 19/11; H04N 19/105; H04N 19/159;
H04N 19/176; H04N 19/593**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **InterDigital CE Patent Holdings, SAS
75017 Paris (FR)**

(72) Inventors:
• **LEFEBVRE, Frederic
35000 RENNES (FR)**

• **DUMAS, Thierry
35700 RENNES (FR)**
• **LE LEANNEC, Fabrice
35830 BETTON (FR)**
• **NASER, Karam
35250 MOUAZE (FR)**

(74) Representative: **Rittner, Karsten
Rittner & Partner
Patentanwälte mbB
Schiffgraben 17
30159 Hannover (DE)**

(54) **DECODER SIDE INTRA MODE DERIVATION HISTOGRAM BLENDING WEIGHTS**

(57) Systems, methods, and instrumentalities may be provided for blending histogram of gradients (HoGs) from DIMD and non-DIMD blocks. A video coding device may generate a first set of blocks that may select non-decoder side intra mode derivation (non-DIMD) merge mode for prediction. The device may obtain, from the first set of blocks, coding information associated with a current block comprising a prediction mode. A first HoG may be derived based on the prediction mode. The device may determine a first weight associated with the first HoG. The first weight associated with the first HoG may be determined based on the coding information. The device may generate a merged histogram of gradients (MHoG) at least based on a second set of HOGs associated with a second set of blocks (e.g., associated with DIMD blocks) and by applying the first weight to the first HoG.

FIG. 17

EP 4 633 143 A1

**Description**

**BACKGROUND**

Video coding systems may be used to compress digital video signals, e.g., to reduce the storage and/or transmission bandwidth needed for such signals. Video coding systems may include, for example, block-based systems.

**SUMMARY**

Systems, methods, and instrumentalities are configured for decoder side intra mode derivation (DIMD) histogram blending weights. In examples, a device (e.g., a video decoding device) may determine a first set of blocks. A block of the first set of blocks selects non- decoder-side intra mode derivation (DIMD) merge mode for prediction. The device may obtain, from the first set of blocks, coding information associated with a current block. The coding information may include at least a prediction mode. The device may derive a first HoG. The first HoG may be derived based on the prediction mode. The device may determine a first weight associated with the first HoG. The first weight associated with the first HoG may be determined based on the coding information. The device may obtain a merged histogram of gradients (MHoG). The MHoG may be obtained at least by applying the first weight to the first HoG.

The device may determine a second set of blocks. A block of the second set of blocks may select DIMD merge mode for prediction. The device may derive a second HoG. The MHoG may be further obtained based on at least the first HoG or the second HoG. The first set of blocks and the second set of blocks may be neighboring blocks associated with the current block. The device may predict the current block based on one or more intra prediction modes obtained based on the MHoG.

The coding information may include a coding block Flag (CBF) or a set of coefficients associated with the current block that is obtained from prediction error. The device may derive a normalized HoG. The normalized HoG may be obtained based on normalization information. The MHoG may be further obtained based on the normalized HoG. The device may filter the first set of blocks according to a distance between a current block and a block in the first set of blocks or according to difference between a size of the current block and a size of the block in the first set of blocks. The first HoG may be a synthetic HoG. The first weight may be a synthetic weight. The first HoG may be a synthetic normalized HoG.

**BRIEF DESCRIPTION OF THE DRAWINGS**

FIG. 1A is a system diagram illustrating an example communications system in which one or more disclosed embodiments can be implemented.

FIG. 1B is a system diagram illustrating an example wireless transmit/receive unit (WTRU) that can be used within the communications system illustrated in FIG. 1A according to an embodiment.

FIG. 1C is a system diagram illustrating an example radio access network (RAN) and an example core network (CN) that can be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 is a diagram illustrating an example video encoder.

FIG. 3 is a diagram illustrating an example video decoder.

FIG. 4 is a diagram illustrating an example of a system in which various aspects and examples may be implemented.

FIG. 5 is a diagram illustrating an example of extracting gradients from the context of a block to be predicted.

FIG. 6 is a diagram illustrating an example of identifying the range of a target intra prediction mode.

FIG. 7 is a diagram illustrating an example of computing an angle θ between a reference axis and the direction perpendicular to a gradient.

FIG. 8 is a diagram illustrating another example of computing an angle θ between a reference axis and the direction perpendicular to a gradient.

FIG. 9 is a diagram illustrating an example of computing the index of a target intra prediction mode.

FIG. 10 is a diagram illustrating another example of computing the index of a target intra prediction mode.

FIG. 11 is a diagram illustrating examples of DIMD regions that may be used to infer the location dependency of DIMD modes.

FIG. 12 is a diagram illustrating an example of computing an MHOG of a current block from HOGs associated with one or more neighbor blocks of the current block.

FIG. 13 is a diagram illustrating an example of workflow of the normalization of a HOG involved in the merge of HOGs before applying the merge.

FIG. 14 is a diagram illustrating an example of DIMD merge with non-adjacent candidates.

FIG. 15 is a diagram illustrating an example of workflow of the normalization of a HOG involved in the merge of HOGs before applying the merge.

FIG. 16 is a diagram illustrating an example of blending of DIMD and non-DIMD HoGs.

FIG. 17 is a diagram illustrating an example of workflow of the blending of HoGs from DIMD and HoGs from non-DIMD blocks.

FIG. 18 is a diagram illustrating an example of blending of DIMD and non DIMD for a neighboring block.

FIG. 19 is a diagram illustrating an example of a derivation of weight from a prediction mode.

FIG. 20 is a diagram illustrating non-adjacent blocks.

FIG. 21 is a diagram illustrating an example computation of the MHOG of the current block from the HoGs of three non-adjacent blocks. Two blocks may be DIMD, and one block may not be DIMD.

FIG. 22 illustrates a diagram illustrating an example of a weight factor from coding information.

## DETAILED DESCRIPTION

A more detailed understanding can be had from the following description, given by way of example in conjunction with the accompanying drawings.

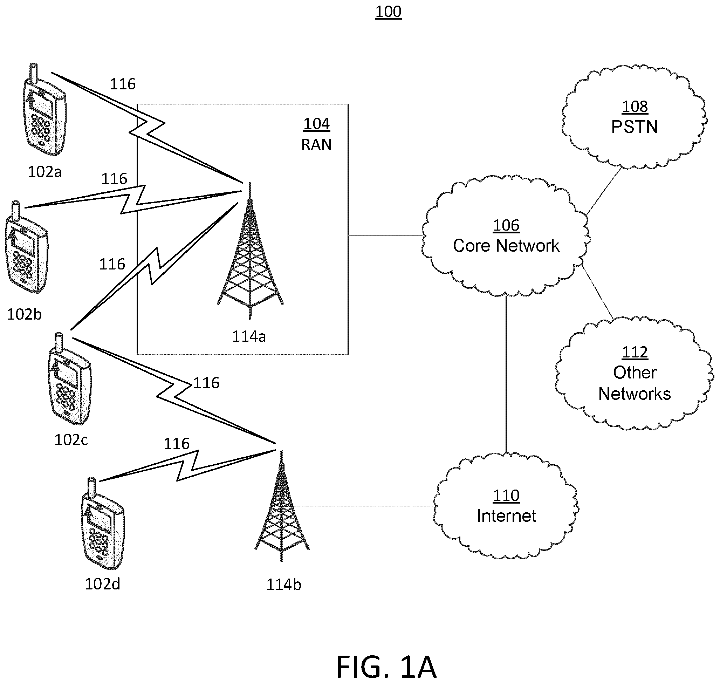

FIG. 1A is a diagram illustrating an example communications system 100 in which one or more disclosed embodiments can be implemented. The communications system 100 can be a multiple access system that provides content, such as voice, data, video, messaging, broadcast, etc., to multiple wireless users. The communications system 100 can enable multiple wireless users to access such content through the sharing of system resources, including wireless bandwidth. For example, the communications systems 100 can employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 can include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d can be any type of device configured to operate and/or communicate in a wireless environment. By way of example, the WTRUs 102a, 102b, 102c, 102d, any of which can be referred to as a "station" and/or a "STA", can be configured to transmit and/or receive wireless signals and can include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d can be interchangeably referred to as a UE.

The communications systems 100 can also include a base station 114a and/or a base station 114b. Each of the base stations 114a, 114b can be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b can be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b can include any number of interconnected base stations and/or network elements.

The base station 114a can be part of the RAN 104/113, which can also include other base stations and/or network elements (not shown), such as a base station controller (BSC), a radio network controller (RNC), relay nodes, etc. The base station 114a and/or the base station 114b can be configured to transmit and/or receive wireless signals on one or more carrier frequencies, which can be referred to as a cell (not shown). These frequencies can be in licensed spectrum, unlicensed spectrum, or a combination of licensed and unlicensed spectrum. A cell can provide coverage for a wireless service to a specific geographical area that can be relatively fixed or that can change over time. The cell can further be divided into cell sectors. For example, the cell associated with the base station 114a can be divided into three sectors. Thus, in one embodiment, the base station 114a can include three transceivers, i.e., one for each sector of the cell. In an embodiment, the base station 114a can employ multiple-input multiple output (MIMO) technology and can utilize multiple transceivers for each sector of the cell. For example, beamforming can be used to transmit and/or receive signals in desired spatial directions.

The base stations 114a, 114b can communicate with one or more of the WTRUs 102a, 102b, 102c, 102d over an air interface 116, which can be any suitable wireless communication link (e.g., radio frequency (RF), microwave, centimeter wave, micrometer wave, infrared (IR), ultraviolet (UV), visible light, etc.). The air interface 116 can be established using any suitable radio access technology (RAT).

More specifically, as noted above, the communications system 100 can be a multiple access system and can employ one or more channel access schemes, such as CDMA, TDMA, FDMA, OFDMA, SC-FDMA, and the like. For example, the base station 114a in the RAN 104/113 and the WTRUs 102a, 102b, 102c can implement a radio technology such as Universal Mobile Telecommunications System (UMTS) Terrestrial Radio Access (UTRA), which can establish the air interface 115/116/117 using wideband CDMA (WCDMA). WCDMA can include communication protocols such as High-Speed Packet Access (HSPA) and/or Evolved HSPA (HSPA+). HSPA can include High-Speed Downlink (DL) Packet Access (HSDPA) and/or High-Speed UL Packet Access (HSUPA).

In an embodiment, the base station 114a and the WTRUs 102a, 102b, 102c can implement a radio technology such as Evolved UMTS Terrestrial Radio Access (E-UTRA), which can establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c can implement a radio technology such as NR Radio Access, which can establish the air interface 116 using New Radio (NR).

In an embodiment, the base station 114a and the WTRUs 102a, 102b, 102c can implement multiple radio access technologies. For example, the base station 114a and the WTRUs 102a, 102b, 102c can implement LTE radio access and NR radio access together, for instance using dual connectivity (DC) principles. Thus, the air interface utilized by WTRUs 102a, 102b, 102c can be characterized by multiple types of radio access technologies and/or transmissions sent to/from multiple types of base stations (e.g., a eNB and a gNB).

In other embodiments, the base station 114a and the WTRUs 102a, 102b, 102c can implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A can be a wireless router, Home Node B, Home eNode B, or access point, for example, and can utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d can implement a radio technology such as IEEE 802.11 to establish a wireless local area network (WLAN). In an embodiment, the base station 114b and the WTRUs 102c, 102d can implement a radio technology such as IEEE 802.15 to establish a wireless personal area network (WPAN). In yet another embodiment, the base station 114b and the WTRUs 102c, 102d can utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b can have a direct connection to the Internet 110. Thus, the base station 114b can not be required to access the Internet 110 via the CN 106/115.

The RAN 104/113 can be in communication with the CN 106/115, which can be any type of network configured to provide voice, data, applications, and/or voice over internet protocol (VoIP) services to one or more of the WTRUs 102a, 102b, 102c, 102d. The data can have varying quality of service (QoS) requirements, such as differing throughput requirements, latency requirements, error tolerance requirements, reliability requirements, data throughput requirements, mobility requirements, and the like. The CN 106/115 can provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 can be in direct or indirect communication with other RANs that employ the same RAT as the RAN 104/113 or a different RAT. For example, in addition to being connected to the RAN 104/113, which can be utilizing a NR radio technology, the CN 106/115 can also be in communication with another RAN (not shown) employing a GSM, UMTS, CDMA 2000, WiMAX, E-UTRA, or WiFi radio technology.

The CN 106/115 can also serve as a gateway for the WTRUs 102a, 102b, 102c, 102d to access the PSTN 108, the Internet 110, and/or the other networks 112. The PSTN 108 can include circuit-switched telephone networks that provide plain old telephone service (POTS). The Internet 110 can include a global system of interconnected computer networks and devices that use common communication protocols, such as the transmission control protocol (TCP), user datagram protocol (UDP) and/or the internet protocol (IP) in the TCP/IP internet protocol suite. The networks 112 can include wired and/or wireless communications networks owned and/or operated by other service providers. For example, the networks 112 can include another CN connected to one or more RANs, which can employ the same RAT as the RAN 104/113 or a different RAT.

Some or all of the WTRUs 102a, 102b, 102c, 102d in the communications system 100 can include multi-mode capabilities (e.g., the WTRUs 102a, 102b, 102c, 102d can include multiple transceivers for communicating with different wireless networks over different wireless links). For example, the WTRU 102c shown in FIG. 1A can be configured to communicate with the base station 114a, which can employ a cellular-based radio technology, and with the base station 114b, which can employ an IEEE 802 radio technology.

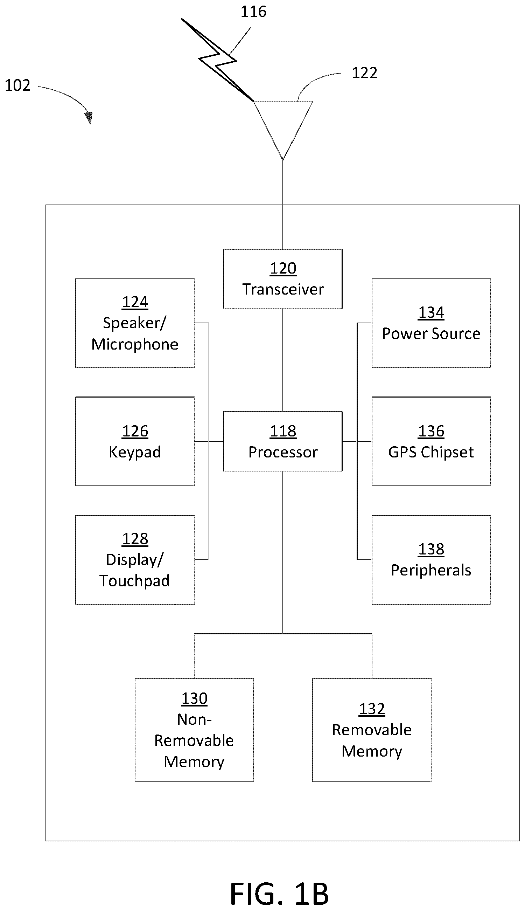

FIG. 1B is a system diagram illustrating an example WTRU 102. As shown in FIG. 1B, the WTRU 102 can include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 can include any sub-combination of the foregoing elements while remaining consistent with an embodiment.

The processor 118 can be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 can perform signal coding, data processing, power control, input/output processing, and/or any other functionality that enables the WTRU 102 to operate in a wireless environment. The processor 118 can be coupled to the transceiver 120, which can be coupled to the transmit/receive element 122. While FIG. 1B depicts the processor 118 and the transceiver 120 as separate components, it will be appreciated that the processor 118 and the transceiver 120 can be integrated together in an electronic package or chip.

The transmit/receive element 122 can be configured to transmit signals to, or receive signals from, a base station (e.g., the base station 114a) over the air interface 116. For example, in one embodiment, the transmit/receive element 122 can be an antenna configured to transmit and/or receive RF signals. In an embodiment, the transmit/receive element 122 can be an emitter/detector configured to transmit and/or receive IR, UV, or visible light signals, for example. In yet another embodiment, the transmit/receive element 122 can be configured to transmit and/or receive both RF and light signals. It will be appreciated that the transmit/receive element 122 can be configured to transmit and/or receive any combination of wireless signals.

Although the transmit/receive element 122 is depicted in FIG. 1B as a single element, the WTRU 102 can include any number of transmit/receive elements 122. More specifically, the WTRU 102 can employ MIMO technology. Thus, in one embodiment, the WTRU 102 can include two or more transmit/receive elements 122 (e.g., multiple antennas) for transmitting and receiving wireless signals over the air interface 116.

The transceiver 120 can be configured to modulate the signals that are to be transmitted by the transmit/receive element 122 and to demodulate the signals that are received by the transmit/receive element 122. As noted above, the WTRU 102 can have multi-mode capabilities. Thus, the transceiver 120 can include multiple transceivers for enabling the WTRU 102 to communicate via multiple RATs, such as NR and IEEE 802.11, for example.

The processor 118 of the WTRU 102 can be coupled to, and can receive user input data from, the speaker/microphone 124, the keypad 126, and/or the display/touchpad 128 (e.g., a liquid crystal display (LCD) display unit or organic light-emitting diode (OLED) display unit). The processor 118 can also output user data to the speaker/microphone 124, the keypad 126, and/or the display/touchpad 128. In addition, the processor 118 can access information from, and store data in, any type of suitable memory, such as the non-removable memory 130 and/or the removable memory 132. The non-removable memory 130 can include random-access memory (RAM), read-only memory (ROM), a hard disk, or any other type of memory storage device. The removable memory 132 can include a subscriber identity module (SIM) card, a memory stick, a secure digital (SD) memory card, and the like. In other embodiments, the processor 118 can access information from, and store data in, memory that is not physically located on the WTRU 102, such as on a server or a home computer (not shown).

The processor 118 can receive power from the power source 134, and can be configured to distribute and/or control the power to the other components in the WTRU 102. The power source 134 can be any suitable device for powering the WTRU 102. For example, the power source 134 can include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 can also be coupled to the GPS chipset 136, which can be configured to provide location information (e.g., longitude and latitude) regarding the current location of the WTRU 102. In addition to, or in lieu of, the information from the GPS chipset 136, the WTRU 102 can receive location information over the air interface 116 from a base station (e.g., base stations 114a, 114b) and/or determine its location based on the timing of the signals being received from two or more nearby base stations. It will be appreciated that the WTRU 102 can acquire location information by way of any suitable location-determination method while remaining consistent with an embodiment.

The processor 118 can further be coupled to other peripherals 138, which can include one or more software and/or hardware modules that provide additional features, functionality and/or wired or wireless connectivity. For example, the peripherals 138 can include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 can include one or more sensors, the sensors can be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 can include a full duplex radio for which transmission and reception of some or all of the signals (e.g., associated with particular subframes for both the UL (e.g., for transmission) and downlink (e.g., for reception) can be concurrent and/or simultaneous. The full duplex radio can include an interference management unit to reduce and or substantially eliminate self-interference via either hardware (e.g., a choke) or signal processing via a processor (e.g., a separate processor (not shown) or via processor 118). In an embodiment, the WTRU 102 can include a half-duplex radio for which transmission and reception of some or all of the signals (e.g., associated with particular subframes for either the UL (e.g., for transmission) or the downlink (e.g., for reception)).

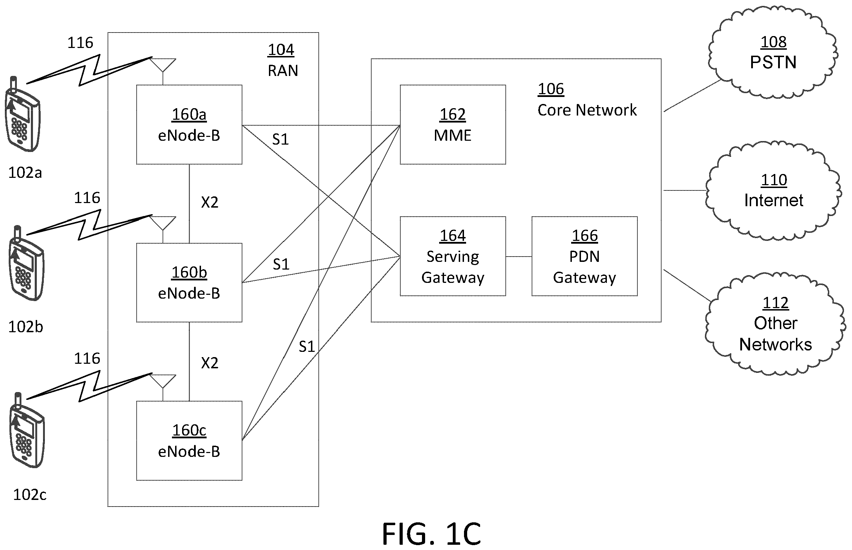

FIG. 1C is a system diagram illustrating the RAN 104 and the CN 106 according to an embodiment. As noted above, the RAN 104 can employ an E-UTRA radio technology to communicate with the WTRUs 102a, 102b, 102c over the air interface 116. The RAN 104 can also be in communication with the CN 106.

The RAN 104 can include eNode-Bs 160a, 160b, 160c, though it will be appreciated that the RAN 104 can include any number of eNode-Bs while remaining consistent with an embodiment. The eNode-Bs 160a, 160b, 160c can each include one or more transceivers for communicating with the WTRUs 102a, 102b, 102c over the air interface 116. In one embodiment, the eNode-Bs 160a, 160b, 160c can implement MIMO technology. Thus, the eNode-B 160a, for example, can use multiple antennas to transmit wireless signals to, and/or receive wireless signals from, the WTRU 102a.

Each of the eNode-Bs 160a, 160b, 160c can be associated with a particular cell (not shown) and can be configured to handle radio resource management decisions, handover decisions, scheduling of users in the UL and/or DL, and the like. As shown in FIG. 1C, the eNode-Bs 160a, 160b, 160c can communicate with one another over an X2 interface.

The CN 106 shown in FIG. 1C can include a mobility management entity (MME) 162, a serving gateway (SGW) 164, and a packet data network (PDN) gateway (or PGW) 166. While each of the foregoing elements are depicted as part of the CN 106, it will be appreciated that any of these elements can be owned and/or operated by an entity other than the CN operator.

The MME 162 can be connected to each of the eNode-Bs 162a, 162b, 162c in the RAN 104 via an S1 interface and can serve as a control node. For example, the MME 162 can be responsible for authenticating users of the WTRUs 102a, 102b, 102c, bearer activation/deactivation, selecting a particular serving gateway during an initial attach of the WTRUs 102a, 102b, 102c, and the like. The MME 162 can provide a control plane function for switching between the RAN 104 and other RANs (not shown) that employ other radio technologies, such as GSM and/or WCDMA.

The SGW 164 can be connected to each of the eNode Bs 160a, 160b, 160c in the RAN 104 via the S1 interface. The SGW 164 can generally route and forward user data packets to/from the WTRUs 102a, 102b, 102c. The SGW 164 can perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 can be connected to the PGW 166, which can provide the WTRUs 102a, 102b, 102c with access to packet-switched networks, such as the Internet 110, to facilitate communications between the WTRUs 102a, 102b, 102c and IP-enabled devices.

The CN 106 can facilitate communications with other networks. For example, the CN 106 can provide the WTRUs 102a, 102b, 102c with access to circuit-switched networks, such as the PSTN 108, to facilitate communications between the WTRUs 102a, 102b, 102c and traditional land-line communications devices. For example, the CN 106 can include, or can communicate with, an IP gateway (e.g., an IP multimedia subsystem (IMS) server) that serves as an interface between the CN 106 and the PSTN 108. In addition, the CN 106 can provide the WTRUs 102a, 102b, 102c with access to the other networks 112, which can include other wired and/or wireless networks that are owned and/or operated by other service providers.

Although the WTRU is described in FIGS. 1A-1D as a wireless terminal, it is contemplated that in certain representative embodiments that such a terminal can use (e.g., temporarily or permanently) wired communication interfaces with the communication network.

In representative embodiments, the other network 112 can be a WLAN.

A WLAN in Infrastructure Basic Service Set (BSS) mode can have an Access Point (AP) for the BSS and one or more stations (STAs) associated with the AP. The AP can have an access or an interface to a Distribution System (DS) or another type of wired/wireless network that carries traffic in to and/or out of the BSS. Traffic to STAs that originates from outside the BSS can arrive through the AP and can be delivered to the STAs. Traffic originating from STAs to destinations outside the BSS can be sent to the AP to be delivered to respective destinations. Traffic between STAs within the BSS can be sent through the AP, for example, where the source STA can send traffic to the AP and the AP can deliver the traffic to the destination STA. The traffic between STAs within a BSS can be considered and/or referred to as peer-to-peer traffic. The peer-to-peer traffic can be sent between (e.g., directly between) the source and destination STAs with a direct link setup (DLS). In certain representative embodiments, the DLS can use an 802.11e DLS or an 802.11z tunneled DLS (TDLS). A WLAN using an Independent BSS (IBSS) mode cannot have an AP, and the STAs (e.g., all of the STAs) within or using the IBSS can communicate directly with each other. The IBSS mode of communication can sometimes be referred to herein as an "ad-hoc" mode of communication.

When using the 802.11 ac infrastructure mode of operation or a similar mode of operations, the AP can transmit a beacon on a fixed channel, such as a primary channel. The primary channel can be a fixed width (e.g., 20 MHz wide bandwidth) or a dynamically set width via signaling. The primary channel can be the operating channel of the BSS and can be used by the STAs to establish a connection with the AP. In certain representative embodiments, Carrier Sense Multiple Access with Collision Avoidance (CSMA/CA) can be implemented, for example in in 802.11 systems. For CSMA/CA, the STAs (e.g., every STA), including the AP, can sense the primary channel. If the primary channel is sensed/detected and/or determined to be busy by a particular STA, the particular STA can back off. One STA (e.g., only one station) can transmit at any given time in a given BSS.

High Throughput (HT) STAs can use a 40 MHz wide channel for communication, for example, via a combination of the primary 20 MHz channel with an adjacent or nonadjacent 20 MHz channel to form a 40 MHz wide channel.

Very High Throughput (VHT) STAs can support 20MHz, 40 MHz, 80 MHz, and/or 160 MHz wide channels. The 40 MHz, and/or 80 MHz, channels can be formed by combining contiguous 20 MHz channels. A 160 MHz channel can be formed by combining 8 contiguous 20 MHz channels, or by combining two non-contiguous 80 MHz channels, which can be referred to as an 80+80 configuration. For the 80+80 configuration, the data, after channel encoding, can be passed through a segment parser that can divide the data into two streams. Inverse Fast Fourier Transform (IFFT) processing, and time domain processing, can be done on each stream separately. The streams can be mapped on to the two 80 MHz channels, and the data can be transmitted by a transmitting STA. At the receiver of the receiving STA, the above described operation for the 80+80 configuration can be reversed, and the combined data can be sent to the Medium Access Control (MAC).

Sub 1 GHz modes of operation are supported by 802.11 af and 802.11 ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah can support Meter Type Control/Machine-Type Communications, such as MTC devices in a macro coverage area. MTC devices can have certain capabilities, for example, limited capabilities including support for (e.g., only support for) certain and/or limited bandwidths. The MTC devices can include a battery with a battery life above a threshold (e.g., to maintain a very long battery life).

WLAN systems, which can support multiple channels, and channel bandwidths, such as 802.11n, 802.11ac, 802.11af, and 802.11ah, include a channel which can be designated as the primary channel. The primary channel can have a bandwidth equal to the largest common operating bandwidth supported by all STAs in the BSS. The bandwidth of the primary channel can be set and/or limited by a STA, from among all STAs in operating in a BSS, which supports the smallest bandwidth operating mode. In the example of 802.11ah, the primary channel can be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings can depend on the status of the primary channel. If the primary channel is busy, for example, due to a STA (which supports only a 1 MHz operating mode), transmitting to the AP, the entire available frequency bands can be considered busy even though a majority of the frequency bands remains idle and can be available.

In the United States, the available frequency bands, which can be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

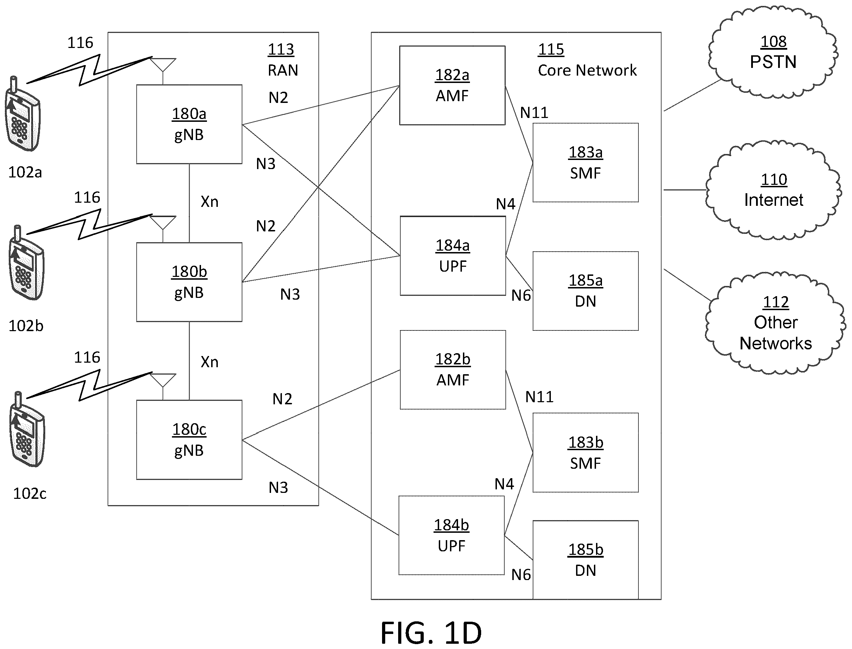

FIG. 1D is a system diagram illustrating the RAN 113 and the CN 115 according to an embodiment. As noted above, the RAN 113 can employ an NR radio technology to communicate with the WTRUs 102a, 102b, 102c over the air interface 116. The RAN 113 can also be in communication with the CN 115.

The RAN 113 can include gNBs 180a, 180b, 180c, though it will be appreciated that the RAN 113 can include any number of gNBs while remaining consistent with an embodiment. The gNBs 180a, 180b, 180c can each include one or more transceivers for communicating with the WTRUs 102a, 102b, 102c over the air interface 116. In one embodiment, the gNBs 180a, 180b, 180c can implement MIMO technology. For example, gNBs 180a, 108b can utilize beamforming to transmit signals to and/or receive signals from the gNBs 180a, 180b, 180c. Thus, the gNB 180a, for example, can use multiple antennas to transmit wireless signals to, and/or receive wireless signals from, the WTRU 102a. In an embodiment, the gNBs 180a, 180b, 180c can implement carrier aggregation technology. For example, the gNB 180a can transmit multiple component carriers to the WTRU 102a (not shown). A subset of these component carriers can be on unlicensed spectrum while the remaining component carriers can be on licensed spectrum. In an embodiment, the gNBs 180a, 180b, 180c can implement Coordinated Multi-Point (CoMP) technology. For example, WTRU 102a can receive coordinated transmissions from gNB 180a and gNB 180b (and/or gNB 180c).

The WTRUs 102a, 102b, 102c can communicate with gNBs 180a, 180b, 180c using transmissions associated with a scalable numerology. For example, the OFDM symbol spacing and/or OFDM subcarrier spacing can vary for different transmissions, different cells, and/or different portions of the wireless transmission spectrum. The WTRUs 102a, 102b, 102c can communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c can be configured to communicate with the WTRUs 102a, 102b, 102c in a standalone configuration and/or a non-standalone configuration. In the standalone configuration, WTRUs 102a, 102b, 102c can communicate with gNBs 180a, 180b, 180c without also accessing other RANs (e.g., such as eNode-Bs 160a, 160b, 160c). In the standalone configuration, WTRUs 102a, 102b, 102c can utilize one or more of gNBs 180a, 180b, 180c as a mobility anchor point. In the standalone configuration, WTRUs 102a, 102b, 102c can communicate with gNBs 180a, 180b, 180c using signals in an unlicensed band. In a non-standalone configuration WTRUs 102a, 102b, 102c can communicate with/connect to gNBs 180a, 180b, 180c while also communicating with/connecting to another RAN such as eNode-Bs 160a, 160b, 160c. For example, WTRUs 102a, 102b, 102c can implement DC principles to communicate with one or more gNBs 180a, 180b, 180c and one or more eNode-Bs 160a, 160b, 160c substantially simultaneously. In the non-standalone configuration, eNode-Bs 160a, 160b, 160c can serve as a mobility anchor for WTRUs 102a, 102b, 102c and gNBs 180a, 180b, 180c can provide additional coverage and/or throughput for servicing WTRUs 102a, 102b, 102c.

Each of the gNBs 180a, 180b, 180c can be associated with a particular cell (not shown) and can be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c can communicate with one another over an Xn interface.

The CN 115 shown in FIG. 1D can include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements can be owned and/or operated by an entity other than the CN operator.

The AMF 182a, 182b can be connected to one or more of the gNBs 180a, 180b, 180c in the RAN 113 via an N2 interface and can serve as a control node. For example, the AMF 182a, 182b can be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing can be used by the AMF 182a, 182b in order to customize CN support for WTRUs 102a, 102b, 102c based on the types of services being utilized WTRUs 102a, 102b, 102c. For example, different network slices can be established for different use cases such as services relying on ultra-reliable low latency (URLLC) access, services relying on enhanced massive mobile broadband (eMBB) access, services for machine type communication (MTC) access, and/or the like. The AMF 162 can provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b can be connected to an AMF 182a, 182b in the CN 115 via an N11 interface. The SMF 183a, 183b can also be connected to a UPF 184a, 184b in the CN 115 via an N4 interface. The SMF 183a, 183b can select and control the UPF 184a, 184b and configure the routing of traffic through the UPF 184a, 184b. The SMF 183a, 183b can perform other functions, such as managing and allocating UE IP address, managing PDU sessions, controlling policy enforcement and QoS, providing downlink data notifications, and the like. A PDU session type can be IP-based, non-IP based, Ethernet-based, and the like.

The UPF 184a, 184b can be connected to one or more of the gNBs 180a, 180b, 180c in the RAN 113 via an N3 interface, which can provide the WTRUs 102a, 102b, 102c with access to packet-switched networks, such as the Internet 110, to facilitate communications between the WTRUs 102a, 102b, 102c and IP-enabled devices. The UPF 184, 184b can perform other functions, such as routing and forwarding packets, enforcing user plane policies, supporting multi-homed PDU sessions, handling user plane QoS, buffering downlink packets, providing mobility anchoring, and the like.

The CN 115 can facilitate communications with other networks. For example, the CN 115 can include, or can communicate with, an IP gateway (e.g., an IP multimedia subsystem (IMS) server) that serves as an interface between the CN 115 and the PSTN 108. In addition, the CN 115 can provide the WTRUs 102a, 102b, 102c with access to the other networks 112, which can include other wired and/or wireless networks that are owned and/or operated by other service providers. In one embodiment, the WTRUs 102a, 102b, 102c can be connected to a local Data Network (DN) 185a, 185b through the UPF 184a, 184b via the N3 interface to the UPF 184a, 184b and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, can be performed by one or more emulation devices (not shown). The emulation devices can be one or more devices configured to emulate one or more, or all, of the functions described herein. For example, the emulation devices can be used to test other devices and/or to simulate network and/or WTRU functions.

The emulation devices can be designed to implement one or more tests of other devices in a lab environment and/or in an operator network environment. For example, the one or more emulation devices can perform the one or more, or all, functions while being fully or partially implemented and/or deployed as part of a wired and/or wireless communication network in order to test other devices within the communication network. The one or more emulation devices can perform the one or more, or all, functions while being temporarily implemented/deployed as part of a wired and/or wireless communication network. The emulation device can be directly coupled to another device for purposes of testing and/or can performing testing using over-the-air wireless communications.

The one or more emulation devices can perform the one or more, including all, functions while not being implemented/deployed as part of a wired and/or wireless communication network. For example, the emulation devices can be utilized in a testing scenario in a testing laboratory and/or a non-deployed (e.g., testing) wired and/or wireless communication network in order to implement testing of one or more components. The one or more emulation devices can be test equipment. Direct RF coupling and/or wireless communications via RF circuitry (e.g., which can include one or more antennas) can be used by the emulation devices to transmit and/or receive data.

This application describes a variety of aspects, including tools, features, examples, models, approaches, etc. Many of these aspects are described with specificity and, at least to show the individual characteristics, are often described in a manner that can sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

The aspects described and contemplated in this application can be implemented in many different forms. The figures provided herein can provide some examples, but other examples are contemplated. The discussion of the figures does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable medium (e.g., storage medium) comprising (e.g., having stored thereon) instructions for encoding or decoding video data according to any of the methods described, and/or a computer readable storage medium having stored thereon a bitstream generated according to any of the methods described. When referred to herein, a bitstream can refer to transmitted data, but can also refer to data that is stored, generated, and/or accessed without being transmitted (e.g., non-transitory data).

In the present application, the terms "reconstructed" and "decoded" can be used interchangeably, the terms "pixel" and "sample" can be used interchangeably, the terms "image," "picture" and "frame" can be used interchangeably.

Various methods are described herein, and each of the methods comprises one or more steps or actions for achieving the described method. Unless a specific order of steps or actions is required for proper operation of the method, the order and/or use of specific steps and/or actions can be modified or combined. Additionally, terms such as "first", "second", etc. can be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and can occur, for example, before, during, or in an overlapping time period with the second decoding.

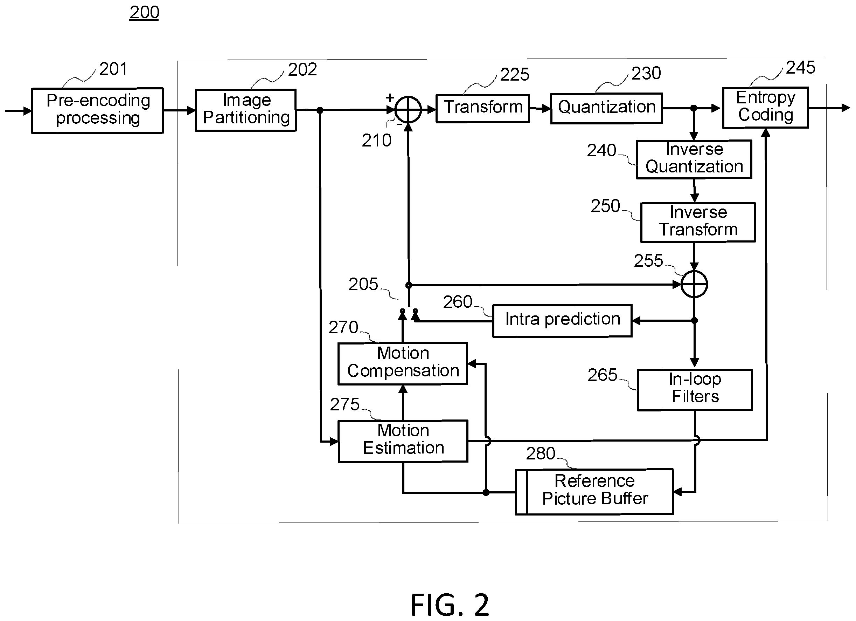

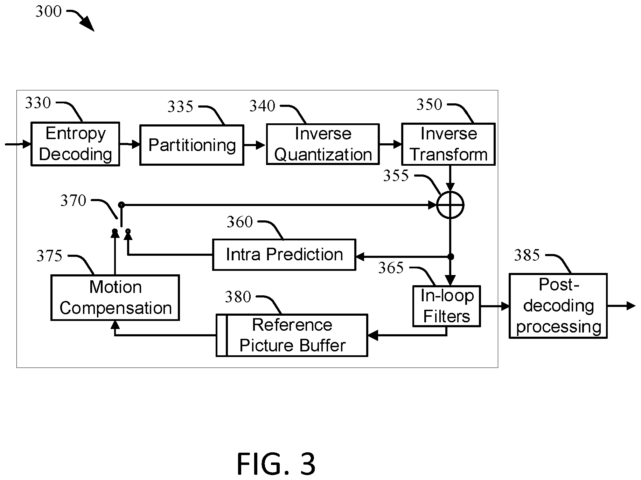

Various methods and other aspects described in this application can be used to modify modules, for example, decoding modules, of a video encoder 200 and decoder 300 as shown in FIG. 2 and FIG. 3. Moreover, the subject matter disclosed herein can be applied, for example, to any type, format or version of video coding, whether described in a standard or a recommendation, whether pre-existing or future-developed, and extensions of any such standards and recommendations. Unless indicated otherwise, or technically precluded, the aspects described in this application can be used individually or in combination.

Various numeric values are used in examples described in the present application. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence can go through pre-encoding processing 201, for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 200, a picture is encoded by the encoder elements as described below. The picture to be encoded is partitioned 202 and processed in units of, for example, coding units (CUs). Each unit is encoded using, for example, either an intra or inter mode. When a unit is encoded in an intra mode, it performs intra prediction 260. In an inter mode, motion estimation 275 and compensation 270 are performed. The encoder decides 205 which one of the intra mode or inter mode to use for encoding the unit, and indicates the intra/inter decision by, for example, a prediction mode flag. Prediction residuals are calculated, for example, by subtracting 210 the predicted block from the original image block.

The prediction residuals are then transformed 225 and quantized 230. The quantized transform coefficients, as well as motion vectors and other syntax elements, are entropy coded 245 to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized 240 and inverse transformed 250 to decode prediction residuals. Combining 255 the decoded prediction residuals and the predicted block, an image block is reconstructed. In-loop filters 265 are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which can be generated by video encoder 200. The bitstream is first entropy decoded 330 to obtain transform coefficients, motion vectors, and other coded information. The picture partition information indicates how the picture is partitioned. The decoder can therefore divide 335 the picture according to the decoded picture partitioning information. The transform coefficients are de-quantized 340 and inverse transformed 350 to decode the prediction residuals. Combining 355 the decoded prediction residuals and the predicted block, an image block is reconstructed. The predicted block can be obtained 370 from intra prediction 360 or motion-compensated prediction (i.e., inter prediction) 375. In-loop filters 365 are applied to the reconstructed image. The filtered image is stored at a reference picture buffer 380.

The decoded picture can further go through post-decoding processing 385, for example, an inverse color transform (e.g., conversion from YCbCr 4:2:0 to RGB 4:4:4) or an inverse remapping performing the inverse of the remapping process performed in the pre-encoding processing 201. The post-decoding processing can use metadata derived in the pre-encoding processing and signaled in the bitstream. In an example, the decoded images (e.g., after application of the in-loop filters 365 and/or after post-decoding processing 385, if post-decoding processing is used) can be sent to a display device for rendering to a user.

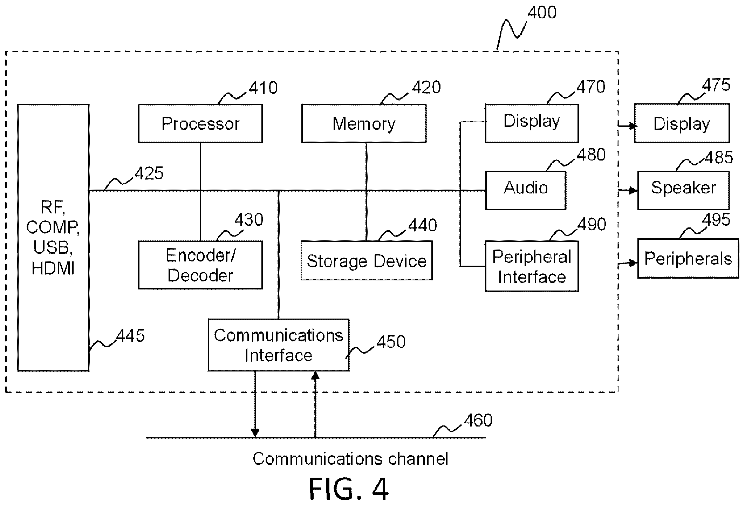

FIG. 4 is a diagram showing an example of a system in which various aspects and examples described herein can be implemented. System 400 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, can be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that can be included in a device to perform the encoding and/or decoding functions. As is known, a device can include one or both of the encoding and decoding modules. Additionally, encoder/decoder module 430 can be implemented as a separate element of system 400 or can be incorporated within processor 410 as a combination of hardware and software as known to those skilled in the art.

Program code to be loaded onto processor 410 or encoder/decoder 430 to perform the various aspects described in this document can be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device can be either the processor 410 or the encoder/decoder module 430) is used for one or more of these functions. The external memory can be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 can be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, can be implemented, for example, within a separate input processing IC or within processor 410 as necessary. Similarly, aspects of USB or HDMI interface processing can be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 can be provided within an integrated housing, Within the integrated housing, the various elements can be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 can be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 can be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices can be communicatively coupled to system 400 via dedicated connections through respective interfaces 470, 480, and 490. Alternatively, the output devices can be connected to system 400 using the communications channel 460 via the communications interface 450. The display 475 and speakers 485 can be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal can be provided via dedicated output connections, including, for example, HDMI ports, USB ports, or COMP outputs.

The examples can be carried out by computer software implemented by the processor 410 or by hardware, or by a combination of hardware and software. As a non-limiting example, the examples can be implemented by one or more integrated circuits. The memory 420 can be of any type appropriate to the technical environment and can be implemented using any appropriate data storage technology, such as optical memory devices, magnetic memory devices, semiconductor-based memory devices, fixed memory, and removable memory, as non-limiting examples. The processor 410 can be of any type appropriate to the technical environment, and can encompass one or more of microprocessors, general purpose computers, special purpose computers, and processors based on a multi-core architecture, as non-limiting examples.

Various implementations include decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations include encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application can refer to "determining" various pieces of information. Determining the information can include one or more of, for example, estimating the information, calculating the information, predicting the information, or retrieving the information from memory. Obtaining can include receiving, retrieving, constructing, generating, and/or determining.

Further, this application can refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application can refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This can be extended, as is clear to one of ordinary skill in this and related arts, for as many items as are listed.

Also, as used herein, the word "signal" refers to, among other things, indicating something to a corresponding decoder. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various examples. It is to be appreciated that signaling can be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described example. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on, or accessed or received from, a processor-readable medium.

Many examples are described herein. Features of examples can be provided alone or in any combination, across various claim categories and types. Further, examples can include one or more of the features, devices, or aspects described herein, alone or in any combination, across various claim categories and types. For example, features described herein can be implemented in a bitstream or signal that includes information generated as described herein. The information can allow a decoder to decode a bitstream, the encoder, bitstream, and/or decoder according to any of the embodiments described. For example, features described herein can be implemented by creating and/or transmitting and/or receiving and/or decoding a bitstream or signal. For example, features described herein can be implemented a method, process, apparatus, medium storing instructions (e.g., computer-readable medium), medium storing data, or signal. For example, features described herein can be implemented by a TV, set-top box, cell phone, tablet, or other electronic device that performs decoding. The TV, set-top box, cell phone, tablet, or other electronic device can display (e.g., using a monitor, screen, or other type of display) a resulting image (e.g., an image from residual reconstruction of the video bitstream). The TV, set-top box, cell phone, tablet, or other electronic device can receive a signal including an encoded image and perform decoding.

[Relevant disclosure starts here]

Decoder side intra mode derivation (DIMD) may be used as an intra prediction tool for block-based video coding. DIMD blending may depend on regions containing the dominant absolute gradient intensities that may yield one or more DIMD derived modes.

DIMD may be performed based on an assumption that the decoded pixels surrounding a given block to be predicted may carry information that may be used to infer the texture directionality in this block. Such texture directionality may indicate the intra prediction mode(s) that may generate the highest quality predictions. The techniques disclosed herein may apply to both a video encoder and a video decoder.

The indices of the intra prediction modes that may generate the highest quality predictions may be inferred via one or more of the following operations (e.g., in three steps). In a first operation, gradients may be extracted from a context of decoded pixels around a given block to be predicted. In a second operation, the gradients may be used to fill a histogram of oriented gradients (HOG). In a third operation, the indices of the intra prediction modes that may generate the highest quality predictions (e.g., according to a DIMD derivation process) may be derived from the HOG and a blending may be performed.

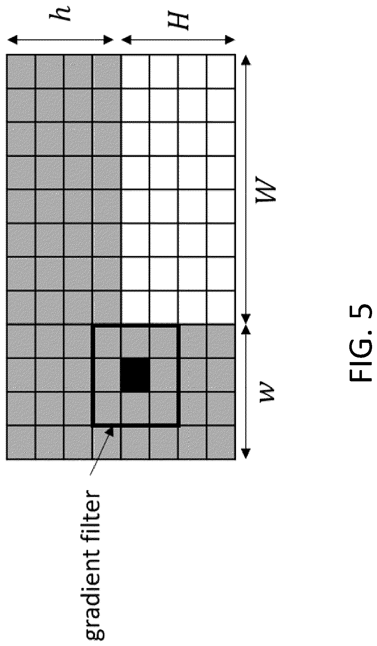

Gradients may be extracted from a context as follows. For a given block to be predicted, an L-shape context of h rows of decoded pixels above this block and w columns of decoded pixels on the left side of this block may be considered, as illustrated by FIG. 5. In the example shown in FIG. 5, the block to be predicted is displayed in white, the context of the block is displayed in gray (e.g., including h rows of decoded pixels located above the block and w columns of pixels located on the left side of the block), and the gradient filter is framed in black. The L-shape context may be referred to as a template of a given block. At a (e.g., each) decoded pixel of interest in this context, a local vertical gradient and a local horizontal gradient may be computed, for example, based on $3\times3$ vertical and horizontal Sobel filters respectively. The decoded pixel of interest in this context may refer to a decoded pixel at which a gradient filter may not go out of the context bounds. The extraction of gradients may be summarized by a convolution (e.g., a valid convolution) of the $3\times3$ vertical and horizontal Sobel filters with the context. In example, h and/or w may be given a value of 3.

A histogram of oriented gradients (HOG) may be filtered. In the HOG, a (e.g., each) bin may be associated with the index of a different directional intra prediction mode. At initialization, one or more (e.g., all) HOG bins may be equal to 0. For a (e.g., each) decoded pixel of interest at which the local vertical gradient $G_{VER}$ and the local horizontal gradient $G_{HOR}$ may be computed, a direction may be derived from $G_{VER}$ and $G_{HOR}$, and the bin associated with the index of the directional intra prediction mode whose direction may be the closest to the derived direction may be incremented. This index may be referred to as a target intra prediction mode index.

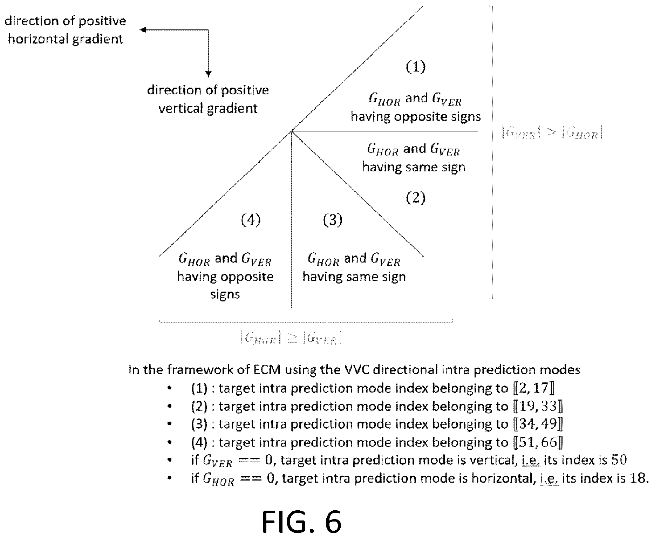

For a given decoded pixel of interest, the derivation of the direction from $G_{VER}$ and $G_{HOR}$ may be based on the following observation. During the prediction of a block via a directional intra prediction mode, the largest gradient in absolute value may be perpendicular to the mode direction. The direction derived from $G_{VER}$ and $G_{HOR}$ may be perpendicular to the gradient of components $G_{VER}$ and $G_{HOR}$. For instance, using multiple (e.g., 65) directional intra prediction modes, and considering vertical and horizontal gradient filters for which the direction of positive vertical gradient may go from top to bottom and the direction of positive horizontal gradient may go from right to left, the mapping from the absolute values of $G_{VER}$ and $G_{HOR}$, and the signs of $G_{VER}$ and $G_{HOR}$ to the range of the target intra prediction mode index may be displayed as in FIG. 6.

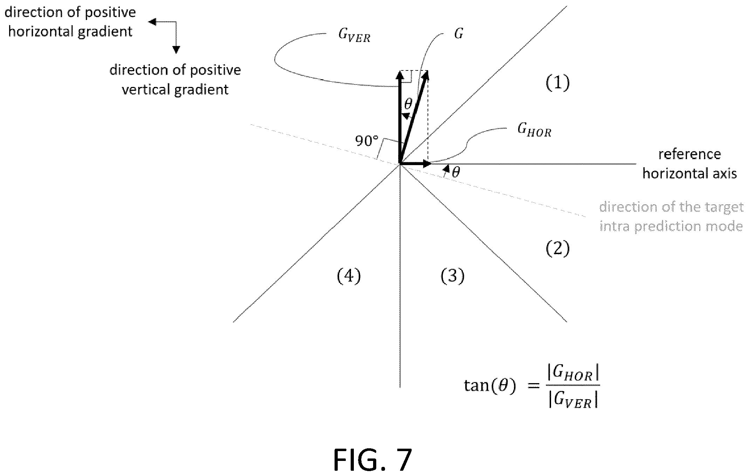

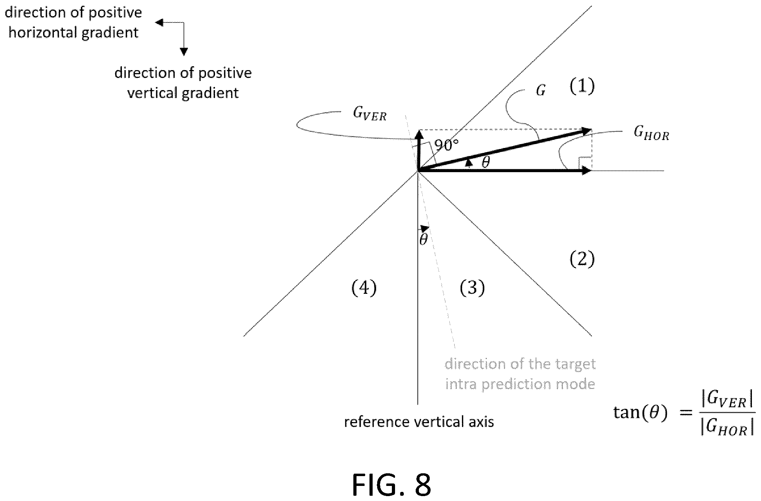

If $|G_{VER}| > |G_{HOR}|$, the reference axis may be the horizontal axis. Otherwise, the reference axis may be the vertical axis. The angle $\theta$ between the reference axis and the direction perpendicular to the gradient G of components $G_{VER}$ and $G_{HOR}$ may be given by $\tan(\theta) = |G_{HOR}|/|G_{VER}|$ if $|G_{VER}| > |G_{HOR}|$, and by $\tan(\theta) = |G_{VER}|/|_{GHOR}|$ otherwise. These are illustrated by FIG. 7 and FIG. 8.

For the current decoded pixel of interest at which the local vertical gradient $G_{VER}$ and the local horizontal gradient $G_{HOR}$ may be computed, and for the range of intra prediction mode indices found in the example of FIG. 5, the index of the intra prediction mode whose angle with respect to the reference axis is the closest to $\theta$ may be found. The bin associated with the index of the found target intra prediction mode may be incremented by $|G_{HOR}| + |G_{VER}|$. Denoting $i$ the bin associated with the index of the found target intra prediction mode, the following may be true: $HOG[i] = HOG[i] + |G_{HOR}| + |G_{VER}|$. For the current decoded pixel of interest, if $G_{HOR} = G_{VER} = 0$, no bin in the HOG may be incremented.

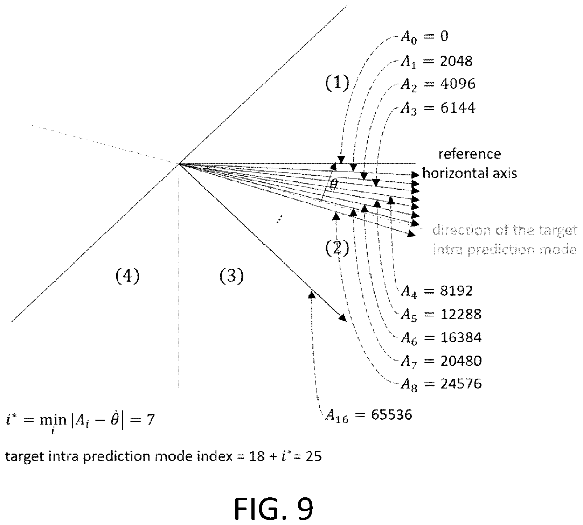

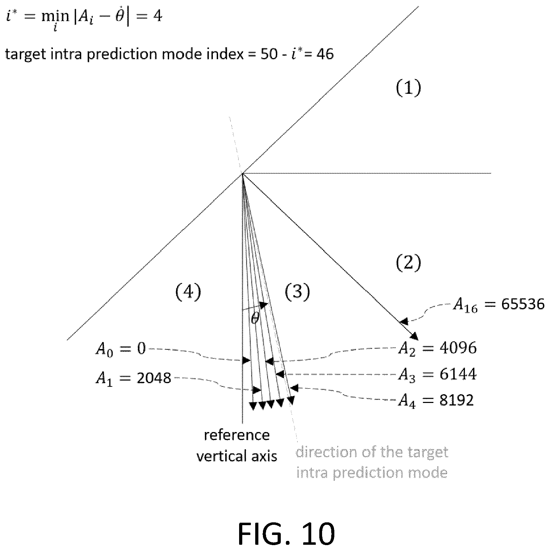

For a given decoded pixel at which the local vertical gradient $G_{VER}$ and the local horizontal gradient $G_{HOR}$ may be computed, and for the found range of the target intra prediction mode index as shown in FIG. 5, the angle $\theta$ described herein may not be directly compared to the angle of each intra prediction mode with respect to the reference axis in this range. The absolute angle of each intra prediction mode with respect to its reference axis may be stored in a scaled integer form. $\dot{\theta} = \text{floor}(\tan(\theta) \times (1 \ll 16))$ may be compared to the scaled integer form $A_i$ of the angle of the directional intra prediction mode of index $i$ from the reference axis, $i \in [|0,16|]$. Here, floor () may denote a floor operation, by which a result of floor(x) for an input x may return the greatest integer less than or equal to x. The absolute shift $i^*$ from the index of the reference axis to the

$$i^* = \min_i | A_i - \dot{\theta}|$$

index of the target intra prediction mode may be . The target intra prediction mode index may be equal to the index of the reference axis shifted by $i^*$. FIG. 9 illustrates an example in which the computation of the index of the target intra prediction mode may be performed using the above-mentioned discretization of $\theta$ under the conditions shown in FIG. 7. FIG. 10 illustrates an example in which the computation of the index of the target intra prediction mode may be performed using the above-mentioned discretization of $\theta$ under the conditions shown in FIG. 8. In the examples of FIG. 9 and FIG. 10, $G_{VER}$ and $G_{HOR}$ may be less than 0.

The index of the directional intra prediction mode that may generate the highest quality prediction with the highest quality may be determined (e.g., once the filling of the HOG is completed) as the one associated with the histogram bin having the largest magnitude. More than one (e.g., two) bin with the largest magnitudes may be identified and used to determine the indices of the directional intra prediction modes that may generate the highest quality predictions (e.g., two predictions) according to DIMD. The prediction modes may be combined (e.g., linearly) with PLANAR. The number of bins may be set to 6.

For a given luma coding block (CB) to be predicted, DIMD may be signaled (e.g., via a DIMD flag) and placed first in the decision tree of the signaling associated with the intra prediction mode selected to predict this luma CB (e.g., the DIMD flag may be placed before a template-matching prediction (TMP) flag and a matrix-based intra prediction (MIP) flag).

DIMD modes may be location-dependent (e.g., based on regions). Non-uniform, sample-based weights may be used to blend DIMD predictions. The usage of sample-based blending and the specific weights to use for a given prediction, may be inferred during DIMD derivation. When deriving a DIMD mode, a determination may be made regarding whether the derivation of such mode may be influenced (e.g., most inferenced) by the template region above or on the left of the current block. If the DIMD mode is mostly derived from samples above the current block, higher weights may be used (e.g., when blending the corresponding prediction) for samples closer to the above portion of the block.

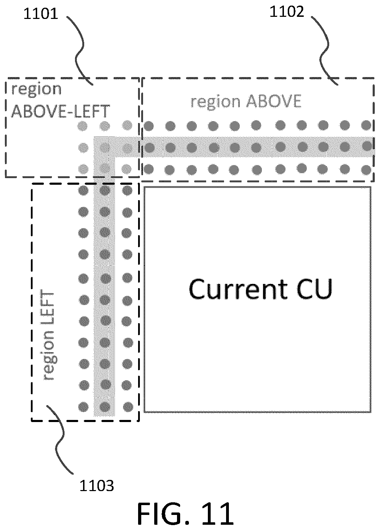

To determine whether specific samples in a template (e.g., a DIMD template) contribute to the inference of a specific DIMD mode, multiple regions may be considered within the template, as illustrated by FIG. 11 (e.g., showing an ABOVE-LEFT region 1101, an ABOVE region 1102, and a LEFT region 1103). Gradient computation may be performed separately for samples in each region, resulting in multiple (e.g., three) histograms, such as, e.g., $H_{above}$, $H_{left}$ and $H_{aboveLeft}$, respectively. For a directional mode m, $H_{above}[m]$ may represent the cumulative magnitude of multiple (e.g., all) samples in the ABOVE region in direction m. It should be noticed that the template area may be extended by a sample on the top-left and a sample on the bottom-right, with respect to a conventional DIMD.

The full histogram of gradients for the whole template may be computed as the sum of the multiple (e.g., three) separate histograms. The two directional modes with the largest and second-largest cumulative magnitude in the histogram may be selected as main and secondary DIMD modes, $dimdMode_0$ and $dimdMode_1$, respectively.

The histograms $H_{above}$ and $H_{left}$ may be used to determine whether $dimdMode_0$ and/or $dimdMode_1$ may depend on a specific template region ABOVE or LEFT. The location-dependency of $dimdMode_i$, denoted as $locDep_i$, may be defined as follows:

$$\text{If}: (H_{above}[dimdMode_i] > 2H_{left}[dimdMode_i]), \text{ then:}$$

$$locDep_i = 1 \ (\text{e.g.}, dimdMode_i \text{ may depend on region ABOVE}).$$

$$\text{Else if}: (H_{left}[dimdMode_i] > 2H_{above}[dimdMode_i]), \text{ then:}$$

$$locDep_i = 2 \ (\text{e.g.}, dimdMode_i \text{ may depend on region LEFT}).$$

Else:

$$locDep_i = 0 \ (\text{e.g.}, dimdMode_i \text{ may not be location-dependent}).$$

Blending may be performed to fuse the main and secondary DIMD predictions, $dimdPred_0$ and $dimdPred_1$, with the Planar prediction $dimdPlanar$. In case no DIMD mode is determined to be location-dependent (e.g., $locDep_0 == locDep_1 == 0$), uniform blending may be applied. Uniform weights $wDimd_0$, $wDimd_1$ and $wPlanar$ may be derived based on the relative magnitudes of the modes in the histogram, and the final DIMD prediction may be computed as follows:

$$fusionPred(x,y) = \left(\textstyle\sum_{i=0}^{1}\{wDimd_i * dimdPred_i(x,y)\} + wPlanar * \right.$$

$$\left. dimdPlanar(x,y)\right) \gg 6 \qquad (\text{Eq 1})$$

If at least one of the DIMD modes is inferred to be location-dependent, sample-based blending may be used. A different weight may be used to blend the predictions at each location $(x, y)$. If $locdep_i \neq 0$, the sample-based weights $wLocDepDimd_i(x, y)$ for prediction $dimdPred_i$ may be computed so that the average weight used within the block may be approximately equal to the uniform weight $wDimd_i$ and/or so that higher weights may be used in the portion of the block closer to the region ABOVE or LEFT, depending on $locdep_i$. A range $\Delta_i$ may be pre-defined, corresponding to the largest deviation of $wLocDepDimd_i(x, y)$ from $wDimd_i$. Higher values of $\Delta_i$ may result in a higher variation of the weights within the block. For a block of size $H \times W$, if $locDep_i = 1$, the following may be true:

$$wLocDepDimd_i(x,y) = wDimd_i + \Delta_i - 2\Delta_i \frac{y}{(H-1)}$$

If $locdep_i = 2$, the following may be true:

$$wLocDepDimd_i(x,y) = wDimd_i + \Delta_i - 2\Delta_i \frac{x}{(W-1)}$$

If $locdep_i \neq 0$, $i = 0,1$, the weights $wLocDepDimd_i(x, y)$ may be computed for both predictions as in one of the two equations shown above, depending on the value of $locDep_i$. Conversely, if $locDep_i = 0$ and $locDep_{(1-i)} \neq 0$, the weights for $wLocDepDimd_i(x, y)$ may be computed as follows:

$$wLocDepDimd_i(x,y) = wDimd_i - \frac{wLocDepDimd_{(1-i)}(x,y) - wDimd_{(1-i)}}{2}$$

The weights for the Planar prediction $wLocDepPlanar(x, y)$ may be computed as follows:

$$wLocDepPlanar(x,y) = 64 - \sum_{i=0}^{1}\{wLocDepDimd_i(x,y)\}$$

The location-dependent DIMD prediction (e.g., the final location-dependent DIMD prediction) may be computed as follows:

$$fusionPred(x,y) = \left( \begin{array}{c} \sum_{i=0}^{1}\{wLocDepDimd_i(x,y) * dimdPred_i(x,y)\} + \\ + wLocDepPlanar(x,y) * dimdPlanar(x,y) + 32 \end{array} \right) \gg 6 \quad (Eq\ 2)$$

A DIMD merge mode may be used. In this mode, a merged histogram of gradients (MHOG) may be computed for the current block by combining the HOGs of the neighboring blocks that may have selected DIMD or the DIMD merge mode for intra prediction. The indices of the intra prediction modes used to predict the current block and/or the weights for the potential DIMD blending may be derived from this MHOG.

For the current block (e.g., regarding the combination of HOGs for the current block), if a neighboring block (e.g., a single neighboring block) selects DIMD or the DIMD merge mode, the HOG of this neighboring block may be equal to the MHOG of the current block. If at least two neighboring blocks select DIMD or the DIMD merge mode, the HOGs (e.g., two HOGs) of these neighboring blocks (e.g., two neighboring blocks) may be averaged to form the MHOG of the current block.

For a given block, the DIMD merge mode may be allowed if (e.g., only if) the current block has at least one neighbor selecting DIMD or the DIMD merge mode. If enabled, the use of the DIMD merge mode may be signaled with a CU level flag (e.g., a CABAC coded CU level flag).

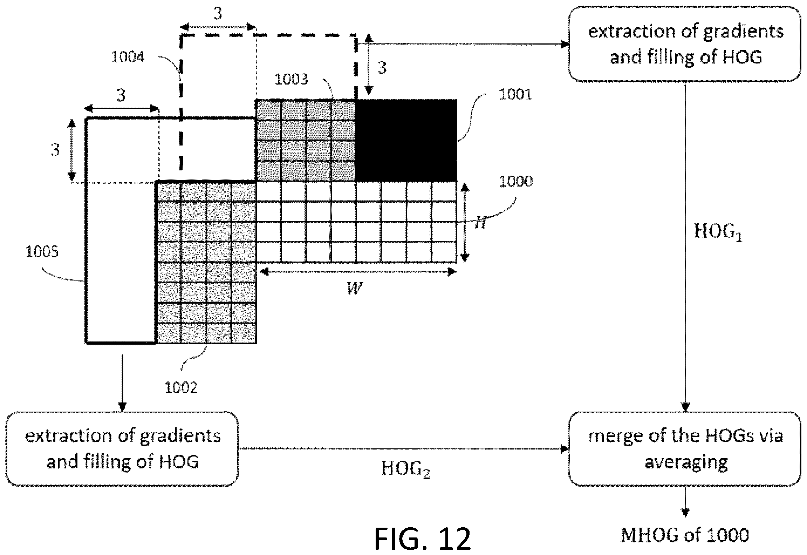

FIG. 12 illustrates an example of computing the MHOG of a current W×H block. As shown in FIG. 12, the current W×H block 1000 may include three neighboring blocks 1001, 1002, and 1003. Block 1002 and block 1003 may select DIMD for intra prediction, whereas block 1001 may select neither DIMD nor the DIMD merge mode for intra prediction. The HOG of block 1003, denoted $HOG_1$, may be filled during the encoding/decoding of the current frame from template 1004 of the reference samples of block 1003, and the HOG of block 1002, denoted $HOG_2$, may be filled during the encoding/decoding of the current frame from template 1005 of the reference samples of block 1002. The MHOG of block 1000 may be computed by averaging $HOG_1$ and $HOG_2$.

DIMD merge may be associated with histogram normalization. For the current block having at least two neighboring blocks selecting either DIMD or the new DIMD merge mode for intra prediction, the merge of HOGs may or may not consider the dynamic of the HOGs to be merged. For example, in FIG. 12, as (1005) is larger than (1004), $HOG_2$ may include more gradient magnitude incrementations than $HOG_1$. During the merge of $HOG_1$ and $HOG_2$, in some examples, the contribution of $HOG_2$ to MHOG may overshoot that of $HOG_1$. In such a case, the contribution of $HOG_2$ to MHOG makes the principle of HOG merging less relevant. A histogram normalization may be incorporated before merging. Histogram normalization may, therefore, be optional. In an example, gradient magnitude may be obtained based on the block size.

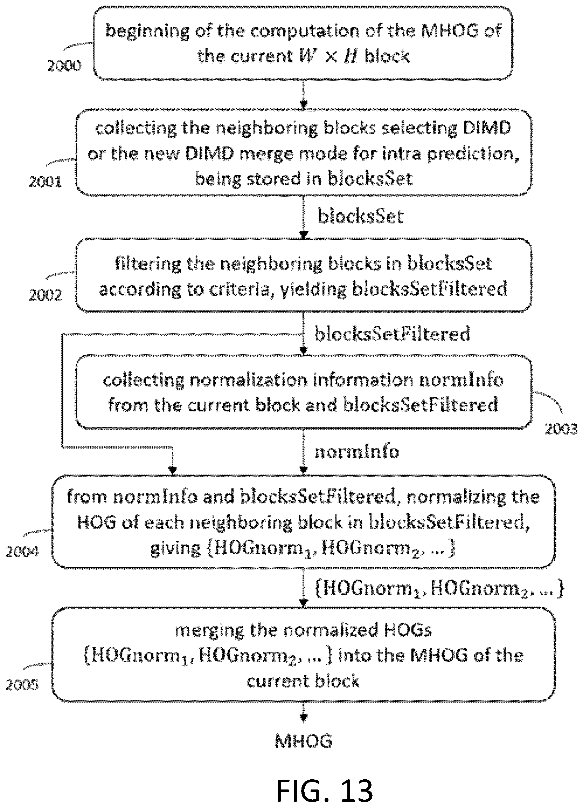

FIG. 13 is a diagram illustrating an example of workflow of the normalization of a HOG involved in the merge of HOGs before applying the merge. The proposed normalization of a HOG involved in the merge of HOGs before combining them to form the MHOG of the current block may be summarized in FIG. 13.

At 2000, the computation of the MHOG of the current $W \times H$ block may be triggered. At 2001, the neighboring blocks that select DIMD or the new DIMD merge mode for intra prediction may be put into blockSet. At 2002, the set of neighboring blocks blockSet may be reduced via filtering according to criteria, yielding the reduced set of neighboring blocks blockSetFiltered. For example, the criteria for eliminating a given neighboring block may be based on the distance between the current block and this neighboring block. As an example, the criteria for eliminating a given neighboring block may be based on the difference between the size of the current block and the size of this neighboring block. At 2003, normalization info norminfo may be collected from the current block and blockSetFiltered. At 2004, using normInfo and blockSetFiltered, the HOG of a neighboring block in blockSetFiltered may be normalized, yielding {$HOGnorm_1$, $HOGnorm_2$, ... }. At 2005, the normalized HOGs {$HOGnorm_1$, $HOGnorm_2$, ... } may be merged into the MHOG of the current block.

DIMD merge may be associated with non-adjacent blocks. As described herein, when neighbor blocks are coded with DIMD mode, the DIMD histograms may be combined to form a (e.g., new) DIMD Merge histogram for the current block. DIMD Merge modes and weights may be computed based on this merged histogram.

As described herein, a (e.g., new) DIMD merge mode with non-adjacent blocks may be presented. Non-adjacent spatial candidates may be used for DIMD merge candidates list construction to compute the intra prediction for the current block.

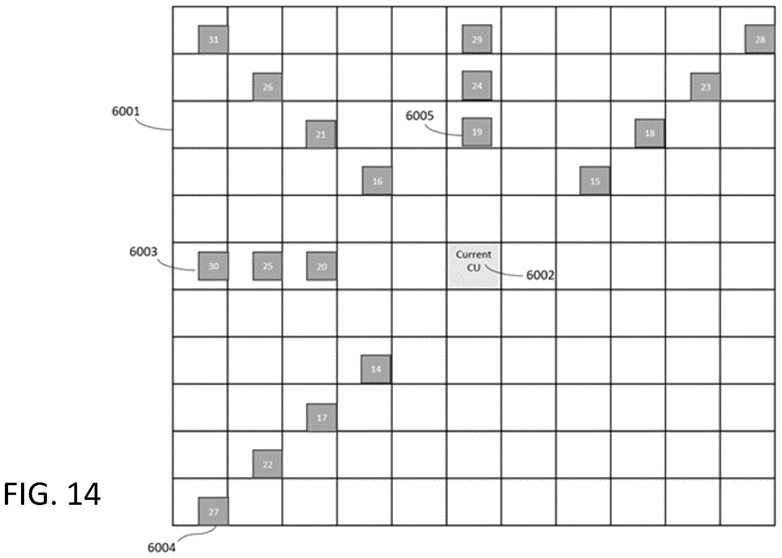

FIG. 14 is a diagram illustrating an example of DIMD merge with non-adjacent candidates. While DIMD merge employs the DIMD information from neighboring blocks (e.g., adjacent blocks) to predict the current block, as described herein, the new DIMD merge with non-adjacent spatial block may use candidates from non-adjacent spatial blocks (e.g.,

6001), as described in FIG. 14.

The distances between non-adjacent candidates blocks (for example, (6003), (6004), (6005)) and current block (6002) may be (e.g., may be defined) based on the width and height of current coding block.

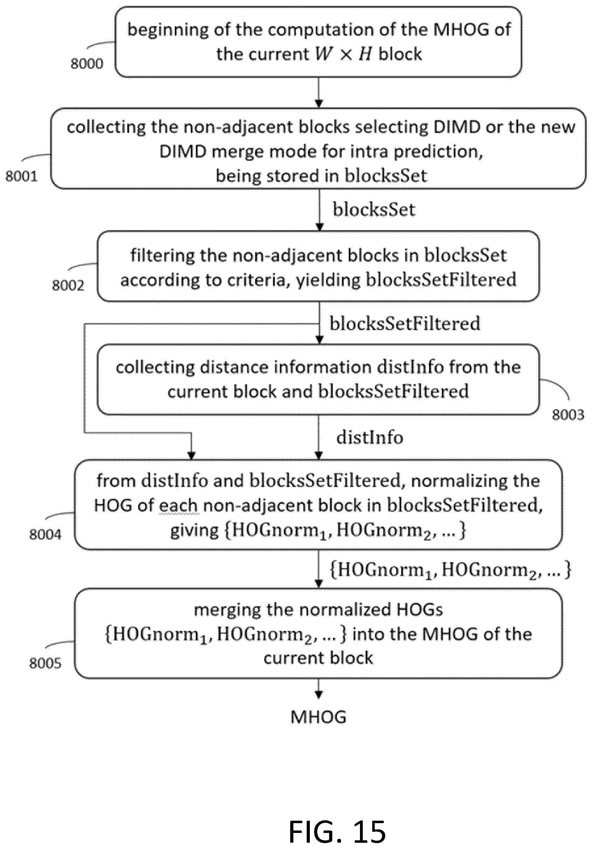

FIG. 15 is a diagram illustrating an example of workflow of the normalization of a HOG involved in the merge of HOGs before applying the merge. The normalization of a HOG for non-adjacent block involved in the merge of HOGs before combining the HOGs to form the MHOG of the current block may be summarized in FIG. 15.

At 8000, the computation of the MHOG of the current $W \times H$ block may be triggered. At 8001, the set of non-adjacent blocks that select DIMD or the new DIMD merge mode for intra prediction may be put into blockSet. blockSet may be listed and a part of it may be selected. For example, the criteria for eliminating a given non-adjacent block may be based on the distance between the current block and the non-adjacent block. For example, the criteria for eliminating a given non-adjacent block may be based on the difference between the size of the current block and the size of the non-adjacent block.

At 8002, the set of non-adjacent blocks blockSet may be reduced via filtering according to criteria, yielding the reduced set of non-adjacent blocks blockSetFiltered. At 8003, distance info distInfo may be collected from the current block and blockSetFiltered. As an example, distInfo may be the Sum of Absolute Distance (SAD) distance between the non-adjacent block and the current block. For example, distInfo may be the spatial distance between the non-adjacent block and the current block. At 8004, using distInfo and blockSetFiltered, the HOG of a non-adjacent block in blockSetFiltered may be normalized, yielding {HOGnorm$_1$, HOGnorm$_2$, ... }. At 8005, the normalized HOGs {HOGnorm$_1$, HOGnorm$_2$, ... } may be merged into the MHOG of the current block.

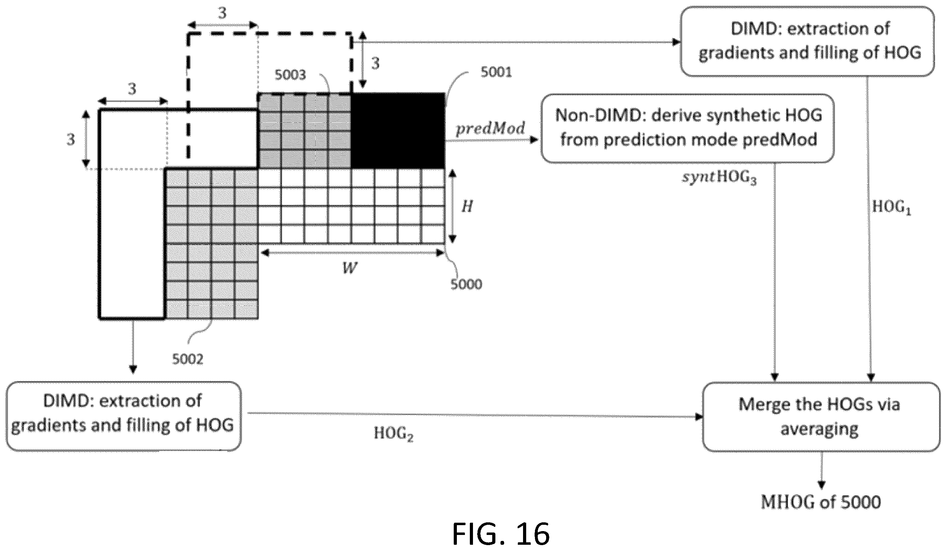

FIG. 16 is a diagram illustrating an example of blending of DIMD and non-DIMD HoGs. DIMD merge may be associated with synthetic DIMD from non-DIMD. Features described herein may be associated with Merged Intra Mode Derivation (MIMD), based on the computation of a Merged Histogram of Gradients (MHoG). Similar to DIMD, up to five MIMD modes may be derived from the MHoG and blended together. The derivation of the modes and blending weights may follow a process to derive DIMD modes and blend weights from the HoG. The MHoG may or may not be computed directly analyzing the template samples and may be computed based on information extracted from the neighboring blocks.

In particular, a number of N neighboring blocks may be considered. A neighboring block may be considered if it is encoded with a (e.g., at least one) directional intra-prediction mode. If the neighboring block is encoded using DIMD (5003 or 5002) or MIMD, then the HoG or MHoG of the neighboring block may be directly considered as $H_i$, where $H_i(m)$ refers to the amplitude of directional mode m in the HoG, where m may take values from 0 to $M$, where $M$ is the maximum number of intra-prediction modes. A normalisation process may be used when considering $H_i$.

If the neighboring block i is instead encoded using a non-DIMD (5001) intra-prediction directional mode m, an HoG $H_i$ may be derived for that neighboring block, where $H_i(k) = 0$ for $k = 0, 1, ... M$, $k \neq$ m and $H_i(m) = A$, where the value $A$ depends on the size of the current block. For neighbouring blocks encoded using SGPM or TIMD where more than one directional intra prediction modes may be available, both directional modes can be considered in the derivation of $H_i$.

The MHoG (5000) $\tilde{H}$ may be computed using (e.g., all) the HoGs extracted from available neighboring blocks as:

$$\tilde{H}(m) = \frac{\sum_{i=0}^{N-1} H_i(m)}{N}$$

The MHoG may be used to compute MIMD modes and weights. The directional modes and their weights corresponding to the five highest amplitudes in the MHoG may be selected as directional modes and weights for MIMD.

FIG. 16 illustrates the blending via averaging of DIMD blocks and non-DIMD blocks for neighboring blocks.

As described herein, the (e.g., new) DIMD may merge generated synthetic HoG for non-DIMD neighbors from their prediction modes (5050). The blending may not consider the relative importance of HoG from DIMD block compared to synthetic HOG from non DIMD block. The blending may not consider the relative importance of a prediction mode compared to another prediction mode to derive synthetic HoG.

MHoG merging may be (e.g., less) relevant in examples of blending HoG from non-DIMD with HoG from DIMD. Blending may be performed, for example, by taking into account importance of DIMD compared to non-DIMD; and an importance of the prediction modes for non-DIMD.

Before merging, HoGs from DIMD and HoGs from non-DIMD may be blended using weighted function. The weighted function may give the importance of DIMD versus non-DIMD and may give an importance of a prediction mode versus another prediction mode.

In examples, HoGs of DIMD block and HoG of non DIMD block may be blended with different weights. HoGs of non-DIMD may be blended with different weights depending on their prediction mode. HoGs from DIMD and non-DIMD that come from neighbors and HoGs from DIMD and non-DIMD that come from non-adjacent blocks may be blended with different weights. For non-DIMD block, the HoG may be calculated and blended with HoG from DIMD block. HoGs may be weighted using coding information such as residuals. Examples of residuals may include CBF, Error Prediction, etc.

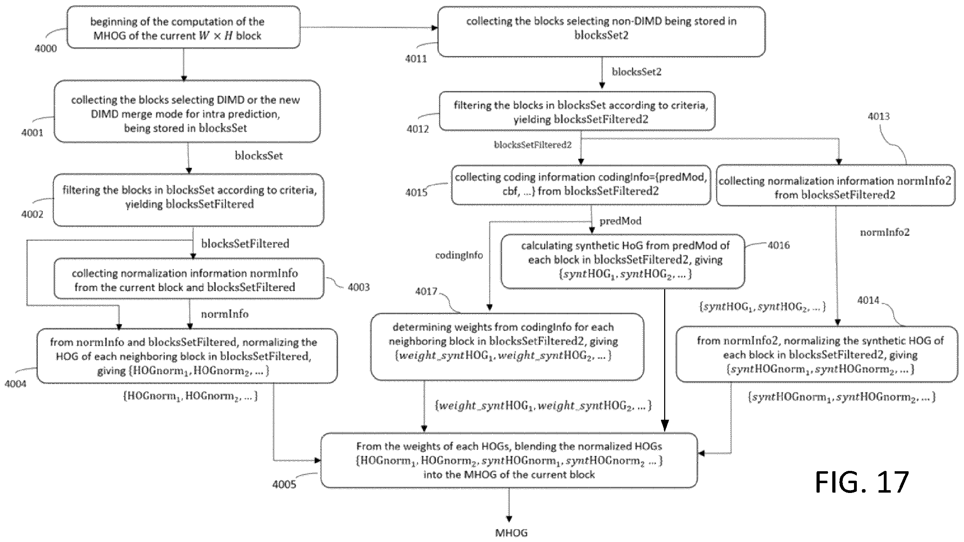

HoGs may be blended from DIMD block and from non-DIMD blocks with different weights. FIG. 17 is a diagram illustrating an example of blending of HoGs from DIMD blocks and HoGs from non-DIMD blocks. As illustrated in FIG. 17, at 4000, the computation of the MHOG of the current $W \times H$ block may be triggered. At 4001, the blocks that selects DIMD or the new DIMD merge mode for intra prediction may be put into blockSet. At 4002, the set of blocks blockSet may be reduced via filtering according to criteria, yielding the reduced set of neighboring blocks blockSetFiltered. For example, the criteria for eliminating a given block may be based on the distance between the current block and this block. For example, the criteria for eliminating a given block may be based on the difference between the size of the current block and the size of this block. At 4003, normalization info norminfo may be collected from the current block and blockSetFiltered. At 4004, using normInfo and blockSetFiltered, the HOG of a neighboring block in blockSetFiltered may be normalized, yielding {HOGnorm$_1$, HOGnorm$_2$, ... }. As discussed herein, the normalization operation may be optional. In some examples, the HOGs without normalization {HOG$_1$, HOG$_2$, ... } may be utilized for forming an MHoG (e.g., as indicated in FIG. 17 by a line bypassing 4003). At 4005, the HoGs {HOG$_1$, HOG$_2$, ... } may be merged to form an MHoG.

At 4011, the blocks that select non-DIMD for intra prediction may be put into blockSet2. At 4012, the set of blocks blockSet2 may be reduced via filtering according to criteria, yielding the reduced set of blocks blockSetFiltered2. For example, the criteria for eliminating a given block may be based on the distance between the current block and this block. For example, the criteria for eliminating a given block may be based on the difference between the size of the current block and the size of this block.

At 4013, normalization info, normInfo2 , may be collected from the current block and blockSetFiltered2. At 4015, coding info, codingInfo, such as prediction mode (predMod), Coding Block Flag (CBF) or coefficients from prediction error, may be collected from the current block blockSetFiltered2. At 4016, an (e.g., new) HoG, called synthetic HoG syntHoG, may be derived from the prediction mode predMod from the current block blockSetFiltered2. At 4014, using normInfo2, the synthetic HOG, syntHoG of a non-DIMD block in blockSetFiltered2 may be normalized, yielding {syntHOGnorm$_1$, syntHOGnorm$_2$, ...}.

At 4017, using *codingInfo,* the weight of normalized syntheticHoG, may be determined, yielding {*weight_*syntHOGnorm$_1$, *weight_synt*HOGnorm$_2$, ... }. The weight *weight_synt*HOGnorm may be equal to 0.8 for synthetic normalized HoG, syntHoGnorm, from non-DIMD block compared to a weight of 1 for normalized HoG, HoGnorm from DIMD block.

At 4005, the normalized HOGs from DIMD blocks {HOGnorm$_1$, HOGnorm$_2$, ... } and normalized synthetic HOGs from non-DIMD blocks {syntHOGnorm$_1$, syntHOGnorm$_2$, ... } may be blended into the MHOG of the current block using weight of a non-DIMD bock {*weight_synt*HOGnorm$_1$, weight_syntHOGnorm$_2$, ...}.

In examples, at 4005, the weights determined at 4017 {*weight_synt*HOGnorm$_1$, *weight_*syntHOGnorm$_2$, ... } may be applied to the synthetic HoGs blocks {syntHOG$_1$, *synt*HOG$_2$, ... } calculated at 4016.

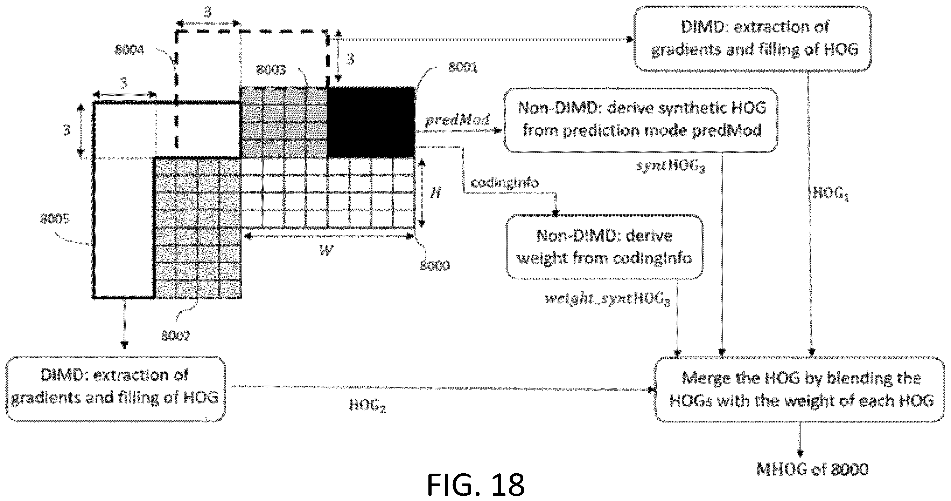

FIG. 18 is a diagram illustrating an example of blending of DIMD and non DIMD for a neighboring block. In FIG. 18, an HoG from a neighboring DIMD block and an HoG from a neighboring non DIMD block may be blended. The weight *weight_*syntHOGnorm$_3$ may be equal to 0.8 for synthetic normalized HoG, syntHOGnorm$_3$, from non-DIMD block compared to a weight of 1 for normalized HoG, HoGnorm from DIMD block.

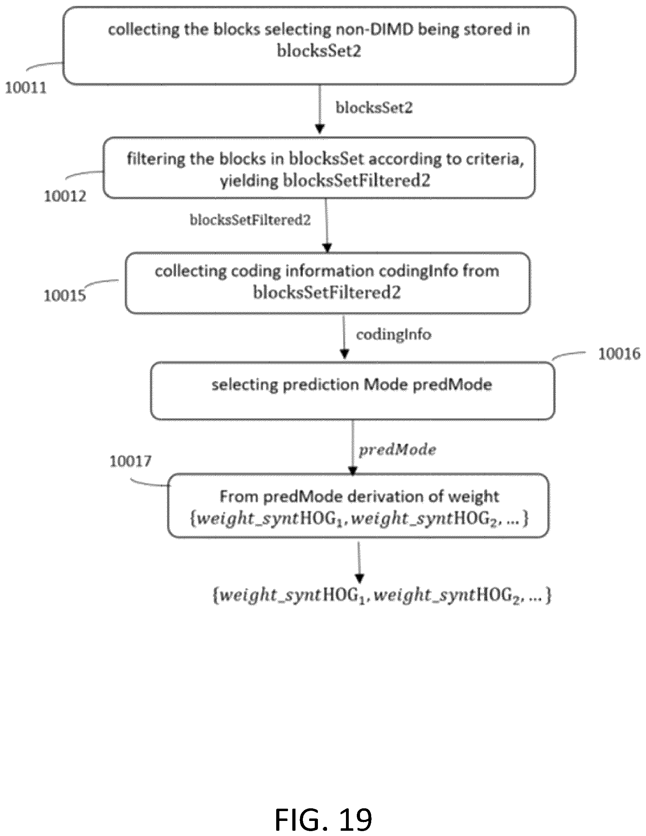

Features described herein may be associated with weighting strategies. HoGs of non-DIMD may be blended with weights (e.g., different weights) depending on their prediction mode. FIG. 19 is a diagram illustrating an example of a derivation of weight from a prediction mode. The weights may be non-equal for blending HoGs from non-DIMD blocks. The weights may derive from prediction mode (10016) from the non-DIMD block (10011). A prediction mode from non-DIMD block may lead to a different weight to blend for a synthetic HoG from non-DIMD block. Prediction mode (100016) may be considered to derive the weight of non-DIMD block. FIG. 19 presents an example diagram of the weight factor computation of non-DIMD block based on the prediction mode.

The non-DIMD block may be collected in blockset2 (1011). In examples, the non-DIMD block may be filtered as described herein to generate blocksetFiltered2 (10012). The coding information codinginfo may be collected (10015) from coding structure for blockset2. The prediction mode may be selected (10016) to derive the weight (10017). The weight may be used in the blending (4005). FIG. 17 illustrates an example of how the weights are used.

The intra prediction modes for which the derivation of a HOG is relevant may be as one or more of the following: for Spatial Geometric Partition Mode (SGPM), the indices of the two intra prediction modes, an intra prediction mode being used to predict a different partition of the block of interest; for Template Matching Prediction (TMP), the index of the intra prediction mode being the first derived DIMD mode when applying DIMD to the predicted block generated by TMP; for Extrapolation-based Intra Prediction (EIP), the index of the intra prediction mode being the first derived DIMD mode when applying DIMD to the predicted block generated by EIP; for TIMD, the indices of the two intra prediction modes derived via TIMD and used to predict the block of interest; or for Matrix-based Intra Prediction (MIP), the index of the intra prediction mode being the first derived DIMD mode when applying DIMD to the predicted block generated via MIP.

In examples, the weighting may be defined via an ordering based on the "closeness" of the intra prediction mode used to predict the block of interest with respect to an associated directional intra prediction mode that is inherited (e.g.

whose index belongs to [|2, 66|]).

For example, if the intra prediction mode used to predict the block of interest is a directional intra prediction mode that is inherited from a coding technique (e.g., WC) (e.g. its index belonging to [|2, 66|]), the priority may be relatively high (e.g. importance level 0). In an example, if the intra prediction mode used to predict the block of interest involves the blending of two intra predictions coming from directional intra prediction modes that are inherited from a coding technique (e.g. indices belonging to [|2, 66|]), the priority may become relatively lower (e.g. importance level 1). In an example, if the intra prediction mode used to predict the block of interest is not an intra prediction mode that is inherited from a coding technique (e.g., whose index does not belong to [|0, 66|]) and the intra prediction mode used to predict the block of interest is associated with a directional intra prediction mode that is inherited from a coding technique (e.g. with index in [|2, 66|]) and obtained by applying DIMD to the prediction of the block of interest, the priority may become lower (e.g. importance level 2). In an example, if the intra prediction mode used to predict the block of interest is PLANAR or DC, the priority may be lower (e.g. importance level 3). For example, if the intra prediction mode used to predict the block of interest involves the blending of two intra predictions, with at least one of the two intra prediction modes being PLANAR or DC, the priority may become lower (e.g. importance level 4).

As described herein, the weighting associated to an intra prediction mode selected to predict the block of interest may be as follows: $w_0$: directional intra prediction mode that is inherited (e.g. index belonging to [|2, 66|]); $w_1$: TIMD where the two derived intra prediction modes are directional (e.g. indices in [|2, 130|] taking into consideration that, in TIMD, the space from top-right to bottom-left is spanned via 129 directions instead of 65); $w_1$: SGPM where the two intra prediction modes, a predicting a different partition of the block of interest, are directional (e.g. indices belonging to [|2, 66|]); $w_2$: TMP in the case where the first derived DIMD mode resulting from the application of DIMD to the predicted block generated by TMP is directional (e.g. its index belonging to [|2, 66|]); $w_2$: EIP in the case where the first derived DIMD mode resulting from the application of DIMD to the predicted block generated by EIP is directional (e.g. its index belonging to [|2, 66|]); $w_2$: MIP in the case where the first derived DIMD mode resulting from the application of DIMD to the predicted block generated by MIP is directional (e.g. its index belonging to [|2, 66|]); $w_3$: PLANAR or DC; $w_4$: TIMD where at least one of the two derived TIMD modes is PLANAR or DC; $w_4$: SGPM where at least one of the two derived TIMD modes is PLANAR or DC; $w_5$: TIMD where the two derived TIMD modes are PLANAR or DC. $w_5$: SGPM where the two derived TIMD modes are PLANAR or DC. $w_0 \geq w_1 \geq w_2 \geq w_3 \geq w_4 \geq w_5$. For example, $w_0 = 0.9$, $w_1 = 0.8$, $w_2 = 0.7$, $w_3 = 0.6$, $w_4 = 0.5$, $w_5 = 0.3$. For example, $w_0 = w_1 = w_2 = 0.9$, $w_3 = w_4 = w_5 = 0.7$

For example, by giving {PLANAR, DC} the lowest weighting, an example association between weightings and an intra prediction mode selected to predict the block of interest may be as follows. $w_0$: directional intra prediction mode that is inherited (e.g., index belonging to [|2, 66|]); $w_1$: TIMD where the two derived modes are directional (e.g. indices in [|2, 130|] taking into consideration that, in TIMD, the space from top-right to bottom-left is spanned via 129 directions instead of 65). $w_1$: SGPM where the two intra prediction modes predicting a different partition of the block of interest, are directional (e.g. indices belonging to [|2, 66|]); $w_2$: TMP in the case where the first derived DIMD mode resulting from the application of DIMD to the predicted block generated by TMP is directional (e.g. its index belonging to [|2, 66|]); $w_2$: EIP in the case where the first derived DIMD mode resulting from the application of DIMD to the predicted block generated by EIP is directional (e.g. its index belonging to [|2, 66|]); $w_2$: MIP in the case where the first derived DIMD mode resulting from the application of DIMD to the predicted block generated by MIP is directional (e.g. its index belonging to [|2, 66|]); $w_3$: TIMD where at least one of the two derived TIMD modes is PLANAR or DC; $w_3$: SGPM where at least one of the two derived TIMD modes is PLANAR or DC; $w_4$: TIMD where the two derived TIMD modes are PLANAR or DC; and $w_4$: SGPM where the two derived TIMD modes are PLANAR or DC. $w_4$: PLANAR or DC. $w_0 \geq w_1 \geq w_2 \geq w_3 \geq w_4$. For example, $w_0 = 0.9$, $w_1 = 0.8$, $w_2 = 0.7$, $w_3 = 0.6$, $w_4 = 0.5$ . For example, $w_0 = w_1 = w_2 = 0.9$, $w_3 = w_4 = 0.7$ .

For example, a group of intra prediction modes having the same weight may be sub-divided. An example of sub-division may be as follows. $w_0$: directional intra prediction mode inherited from VVC (e.g. its index belonging to [|2, 66|]); $w_1$: TIMD where the two derived modes are directional (e.g. indices in [|2, 130|] taking into consideration that, in TIMD, the space from top-right to bottom-left is spanned via 129 directions instead of 65); $w_2$: SGPM where the two intra prediction modes predicting a (e.g., a different) partition of the block of interest, are directional (e.g. indices belonging to [|2, 66|]); $w_3$: TMP in the case where the first derived DIMD mode resulting from the application of DIMD to the predicted block generated by TMP is directional (e.g. its index belonging to [|2, 66|]). $w_4$: EIP in the case where the first derived DIMD mode resulting from the application of DIMD to the predicted block generated by EIP is directional (e.g. its index belonging to [|2, 66|]).

$w_5$: MIP in the case where the first derived DIMD mode resulting from the application of DIMD to the predicted block generated by MIP is directional (e.g. its index belonging to [|2, 66|]). $w_6$: PLANAR or DC. $w_7$: TIMD where at least one of the two derived TIMD modes is PLANAR or DC. $w_8$: SGPM where at least one of the two derived TIMD modes is PLANAR or DC. $w_9$: TIMD where the two derived TIMD modes are PLANAR or DC. $w_{10}$: SGPM where the two derived TIMD modes are PLANAR or DC. $w_0 \geq w_1 \geq w_2 \geq w_3 \geq w_4 \geq w_5 \geq w_6 \geq w_7 \geq w_8 \geq w_9 \geq w_{10}$. For example, $w_0 = w_1 = w_2 = w_3 = w_4 = w_5 = 0.9$, $w_6 = w_7 = w_8 = w_9 = w_{10} = 0.7$

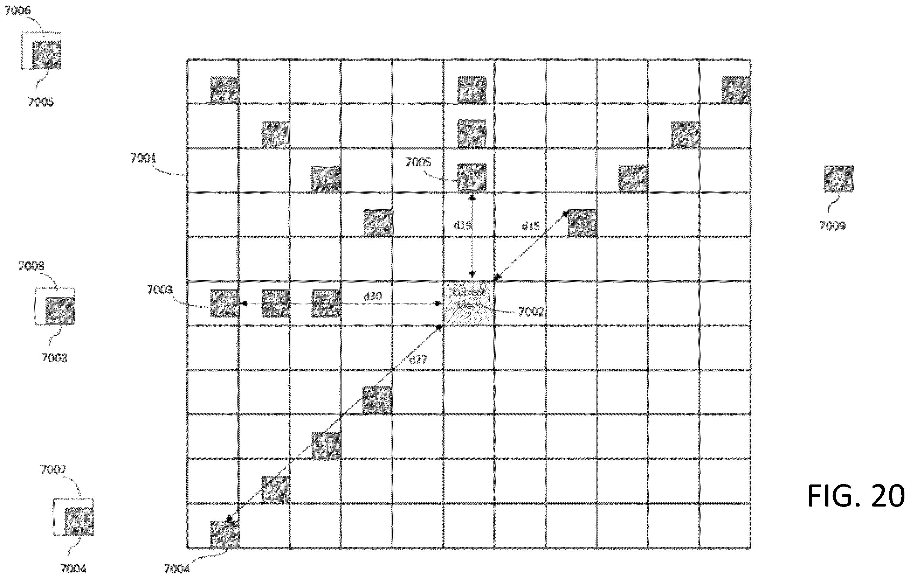

HoGs from DIMD blocks and non-DIMD blocks that come from non-adjacent blocks may be blended with different weights. FIG. 20 is a diagram illustrating non-adjacent blocks. In examples, for an HOG of non-adjacent blocks involved in the merge into the MHOG of the current block, the HOG may be normalized by the spatial distance d with the current block. The number of non-adjacent blocks may vary based on the strategy of non-adjacent blocks selection. Non-adjacent candidates may be searched around the current block. For example, the range of searching non-adjacent candidates (7001) around the current block (7002) may have a size depending on the shape of the current block (7002). Non-adjacent blocks may be listed in FIG. 20 with (7003), (7004), (7005) and (7009).

For example, (7003) is the block number 30, (7004) is the block number 27, (7005) is the block number 27, and (7009) is the block number 15. For example, the current block (7002) and the non-adjacent blocks (e.g., (7003), (7004), (7005) and (7009)) may be a CU (Coded Unit). In examples, the *norm*Info at (4003) and the *norm*Info2 at (4013) in FIG. 17 may be the spatial distance d of a non-adjacent block involved in the merge.

In FIG. 20, (7005), (7003), (7004) are DIMD blocks and (7009) is a non-DIMD block. (7006) corresponds to the template of reconstructed pixels of (7005) (block number 19). (7008) corresponds to the template of reconstructed pixels of (7003) (block number 30). (7007) corresponds to the template of reconstructed pixels of (7004) (block number 27). d19 corresponds to the spatial distance between (7005) and (7002). d30 corresponds to the spatial distance between (7003) and (7002). d27 corresponds to the spatial distance between (7004) and (7002). (7009) corresponds to a non-DIMD block (block number 15). d15 corresponds to the spatial distance between (7005) and (7002). d30 corresponds to the spatial distance between (7003) and (7002). d27 corresponds to the spatial distance between (7004) and (7002). d15 corresponds to the spatial distance between (7009) and (7002)

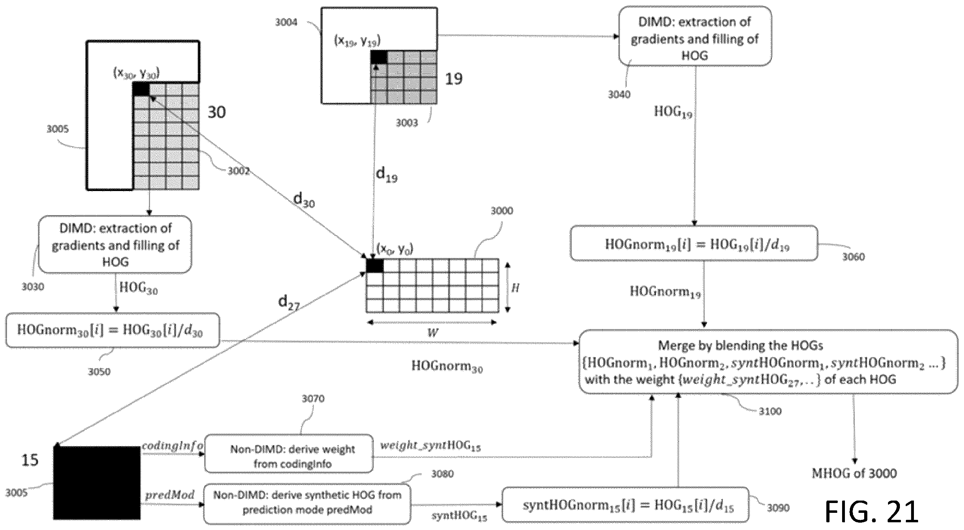

FIG. 21 is a diagram illustrating an example computation of the MHOG of the current block from the HoGs of three non-adjacent blocks. Two blocks may be DIMD, and one block may not be DIMD. As illustrated in FIG. 21, two non-adjacent blocks of FIG. 20 (7003), (7005) of the current (7002) may select DIMD for intra prediction. Some blocks, for e.g., (7004), may select neither DIMD nor the new DIMD merge mode for intra prediction. A criteria selection of a non-adjacent block may be the distance between the non-adjacent block and the current block. For e.g., the non-adjacent block (7004) may be considered too far (d27) from the current block. The non-adjacent block (7004) may not be selected. (7004) is an example of non-selected block.

During the encoding/decoding of the current frame, at 3040, from the template of reconstructed pixels (3004) of the block (3003), the HOG, denoted $HOG_{19}$, of (3003) may have been filled. At 3030, from the template of reconstructed pixels (3005) of the block 30 (3002), the HOG, denoted $HOG_{30}$, of (3002) may have been filled. (3002) and (3003) may be selected as non-adjacent block and corresponds respectively to (7003) and (7005) in FIG. 20.

At 3050, $HOG_{30}$ may be normalized by dividing its (e.g., each of its) bins by the spatial distance between the block to the current block (3000). For example, here, the spatial distance is d30 and may be equal to

$$d_{30} = \sqrt{(x_0 - x_{30})^2 + (y_0 - y_{30})^2}$$ . In examples, $(x_0, y_0)$ and $(x_{30}, y_{30})$ may be the center of their respective blocks.

At 3060, $HOG_{19}$ may be normalized by dividing each of its bins by the spatial distance between the block to the current block (3000). For example, here, the spatial distance is d19 and may be equal to

$$d_{19} = \sqrt{(x_0 - x_{19})^2 + (y_0 - y_{19})^2}$$ . In examples, $(x_0, y_0)$ and $(x_{19}, y_{19})$ may be the center of their respective blocks.

At 3070, the coding info, codingInfo, from the block 15 may be collected. From the codingInfo, a weight is derived *weight_synt*$HOG_{15}$. For e.g., if the prediction mode predMod is considered as the codingInfo, and if it is considered that all prediction modes are equal, and if it is considered that a non-DIMD block is less important than a DIMD block, the weight applied to syntHOGnorm$_{15}$ may be set to .8, *weight_synt*$HOG_{15}$. Features described herein may be associated with (e.g., other) weight strategies. At 3080, *synt*$HOG_{15}$ may be generated by derivation of the modes predMod from the block 15 (3005). At (3090), *synt*$HOG_{15}$ may be normalized by dividing each of its bins by the spatial distance between the block and the current block (3000). For example, here, the spatial distance is d19 and may be equal to $d_{19} =$

$$\sqrt{(x_0 - x_{15})^2 + (y_0 - y_{15})^2}$$ . In example, $(x_0, y_0)$ and $(x_{15}, y_{15})$ may be the center of their respective blocks. At 3100, the MHOG of (3000) may be computed by blending HOGnorm$_{19}$, HOGnorm$_{30}$, syntHOGnorm$_{15}$. syntHOGnorm$_{15}$ may be blended with the weight weight_syntHOGnorm$_{15}$.

In examples, for a HOG of non-adjacent blocks involved in the merge into the MHOG of the current block, the HOG may be normalized by the HOG distance with the current block. In examples, the spatial distance d may be replaced by histogram distance such as the Sum of Absolute Distance (SAD): e.g., SAD30 (3050), and may be equal to

$$SAD_{30} = \sum_{i=1}^{n} Abs(HOG_{30}[i] - HOG_0[i])$$ .

For non-DIMD block, the HoG may be calculated and blended with HoG from a DIMD block. As described herein, for a reconstructed pixel of interest at which the local vertical gradient $G_{VER}$ and the local horizontal gradient $G_{HOR}$ are computed to build the histogram of gradients, a direction may be derived from $G_{VER}$ and $G_{HOR}$, and the bin associated to the index of the directional intra prediction mode whose direction is the closest to the derived direction may be incremented.

As before, in the HOG, a bin may be associated to the index of a (e.g., different) directional intra prediction mode. The HOG, from the reconstructed pixels, is called a recalculated HOG.

For example, the weight factor may be derived as follows: The recalculated HOG or HOGnorm (HOG normalized) may be computed. The weight factor may be 1. From the recalculated HOG, we compute the directional intra prediction mode(s) may be computed and a synthetic HOG may be derived from the directional intra prediction mode(s). The synthetic HOG may be a filtered (e.g., and a simpler version, for example) of the recalculated HOG. The synthetic HOG may be less significant than the recalculated HOG. The weight factor may be 0.8.

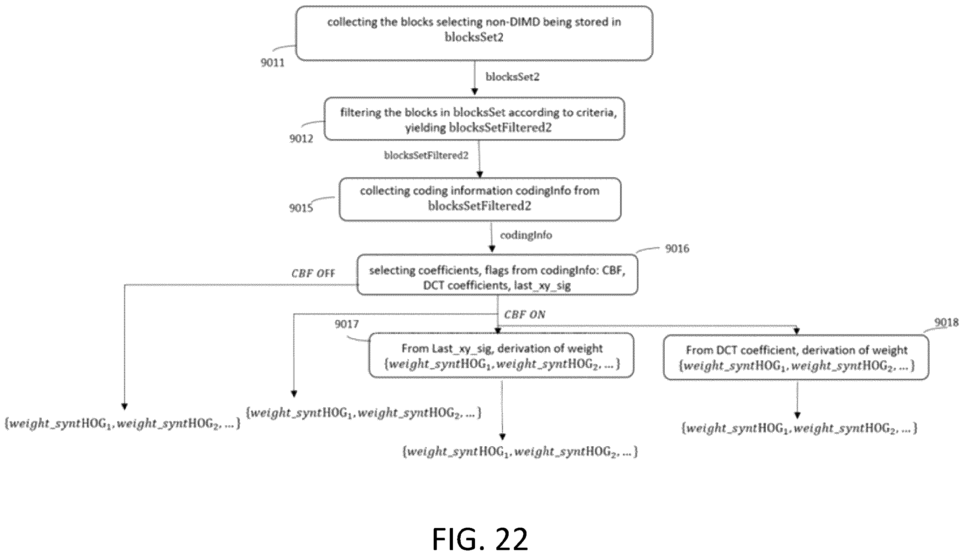

HoGs may be weighted using coding information. FIG. 22 illustrates a diagram illustrating an example of a weight factor from coding information. In examples, the weights may be non-equal for blending HoGs from non-DIMD blocks. As illustrated in FIG. 22, the weights may be derived from codinginfo (9015) and from the non-DIMD blocks (9011). Codinginfo from non-DIMD block may lead to a (e.g., different) weight to blend for a synthetic HoG from non-DIMD block. Codinginfo may be used to derive the weight of non-DIMD block: e.g., Code Block Flag (CBF), last significant bit (last signif_bit) and transform coefficients from a predicted residual block. FIG. 22 presents the diagram of the weight factor computation of non-DIMD block based on coding information.

The non-DIMD block(s) may be collected in blockset2 (9011). In examples, the non-DIMD block(s) may be filtered as detailed previously to generate blocksetFiltered2 (9012). The coding information coding Info may be collected (9015) from coding structure for blockset2. Parameters (9016) e.g., CBF, DCT coefficients, last xy_sig, from coding Info may be selected to derive the weight. The weight may be used in the blending (4005) and detailed in FIG. 17.

The Code Block Flag (CBF) may be checked. CBF may be used to indicate whether the encoding result of the CU contains nonzero residuals. If CBF is equal to 0 (OFF), the residual coefficients of the CU may not need to be coded. The coefficients may (e.g., may all) be 0, and the region may be considered with no details to code. A weight factor may be low (e.g., very low), for e.g., 0.1, for the non-DIMD block. If CBF is equal to 1 (ON), the residual coefficients of the CU may be coded. In examples, residual coefficients of the CU (9018) may be used to derive the weight factor to blend the HOG of this non-DIMD block. The weight may be derived from CBF=ON by setting the weight factor to 0.9 or 1 (compared to 0.1 if CBF=OFF).

Distribution of residual coefficients may be used to derive a weight factor (9018). Residues may be coded using Block-based transform, e.g., Discrete Cosine Transform (DCT) or Low-Frequency Non-Separable Transform (LFNST). The low-frequency components of the transform coefficients may be located and concentrated in the upper left corner of the block, and the high-frequency components may be in the lower right corner. From the distribution of DCT coefficients, a weight factor may be derived. For e.g., X may be a vector of DCT coefficients of the CU. The vector X may be obtained by listing (e.g., all) the matrix coefficients in a raster scan order for example (e.g., vectorization (e.g., any vectorization) may be used, for example, z-scan). The first non-zero DCT coefficient from X may give a relative position m into X. A weight factor may be m/length(X).

In examples, Last_xy_sig flag (9017) may be used to obtain similar information about the coefficient distribution. Last_xy_sig flag (9017) may correspond to the position (x,y) of the last significant quantized DCT coefficient. For e.g., X may be a vector of DCT coefficients of the CU. The vector X may be obtained by listing all the matrix coefficients in a raster scan order for example (e.g., vectorization (e.g., any vectorization) may be used, for example, z-scan). The Last_xy_sig corresponds to a position n in X. A weight factor may be n/length(X).

A HOG may be smoothened. Features described herein may be associated with smoothing of HOGs involved in the merge before merging. In examples, the HOG from DIMD block and/or the synthetic HOG from non-DIM block of the current block involved in the merge or blending giving rise to MHOG may be filtered by a filter before the merge. A filter that reduces the pixel noise in the template of reconstructed samples being reflected in the HOG bins may be used. A filter that reduces the artefact/errors in the synthetic HOG may be used. For example, a Gaussian filter may be used.

$$\text{gaussian}(y) = \frac{1}{\sqrt{2\pi\sigma_y}} \exp^{-\frac{(y-\mu_y)^2}{2\sigma_y^2}}$$

$\mu_y$ is the mean and may be equal to 0. $\sigma_y^2$ is the variance of the kernel of the gaussian filter. The process of filtering may be expressed as follows.

$$\text{HOGnorm}(x) = \sum_z \text{HOG}(z).\,\text{gaussian}(x - z)$$

A LUT of the Gaussian filter may be used to approximate gaussian(y). For example, a Laplace filter may be used.

$$\text{laplace}(y) = \frac{1}{2b}\exp^{-\frac{|y-\mu_y|}{b}}$$

$\mu_y$ is the mean and may be equal to 0. $b > 0$ is a scale parameter. The process of filtering may be expressed as follows.

$$\text{HOGnorm}(x) = \sum_z \text{HOG}(z).\text{laplace}(x-z)$$

A LUT of the Laplace filter may be used to approximate laplace(y). MHOG may be smoothened after blending. After blending the HOGs of the current block involved in the merge, yielding MHOG, MHOG may be filtered. A filter (e.g., any filter) may be used. For example, in the case where a Gaussian filter is used, the process of filtering may be expressed as follows.

$$\text{MHOG}(x) = \sum_z \text{MHOG}(z).\text{gaussian}(x-z)$$

HOG blending and HOG smoothing may be combined. In examples, the normalization of HOGs, as described herein, may be straightforwardly combined with examples associated with the smoothing of HOGs, as described herein.

Although features and elements are described above in particular combinations, one of ordinary skill in the art will appreciate that each feature or element can be used alone or in any combination with the other features and elements. In addition, the methods described herein can be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software can be used to implement a radio frequency transceiver for use in a WTRU, UE, terminal, base station, RNC, or any host computer.

## Claims

1.  A video decoding device, comprising:
    a processor configured to:

    determine a first set of blocks, wherein each block of the first set of blocks selects non-decoder-side intra mode derivation (DIMD) merge mode for prediction;
    obtain, from the first set of blocks, coding information associated with a current block, wherein the coding information comprises at least a prediction mode;
    derive a first HoG, wherein the first HoG is derived based on the prediction mode;
    determine a first weight associated with the first HoG, wherein the first weight associated with the first HoG is determined based on the coding information; and
    obtain a merged histogram of gradients (MHoG), wherein the MHoG is obtained at least by applying the first weight to the first HoG.

2.  The video decoding device of claim 1, wherein the processor is further configured to:

    determine a second set of blocks, wherein each block of the second set of blocks selects DIMD merge mode for prediction; and
    derive a second HoG, wherein the MHoG is further obtained based on at least the first HoG or the second HoG.

3.  The video decoding device of claim 2, wherein the first set of blocks and the second set of blocks are neighboring blocks associated with the current block, and the processor is further configured to predict the current block based on one or more intra prediction modes obtained based on the MHoG.

4. The video decoding device of claim 1, wherein the coding information comprises a coding block Flag (CBF) or a set of coefficients associated with the current block that is obtained from prediction error.

5. The video decoding device of claim 1, wherein the processor is further configured to:
derive a normalized HoG, wherein the normalized HoG is obtained based on normalization information, and wherein the MHoG is further obtained based on the normalized HoG.

6. The video decoding device of claim 1, wherein the processor is further configured to filter the first set of blocks according to a distance between a current block and a block in the first set of blocks or according to difference between a size of the current block and a size of the block in the first set of blocks.

7. The video decoding device of claim 1, wherein the first HoG is a synthetic HoG, the first weight is a synthetic weight, and the first HoG is a synthetic normalized HoG.

8. A video decoding method, comprising:

determining a first set of blocks, wherein each block of the first set of blocks selects non- decoder-side intra mode derivation (DIMD) merge mode for prediction;
obtaining, from the first set of blocks, coding information associated with a current block, wherein the coding information comprises at least a prediction mode;
deriving a first HoG, wherein the first HoG is derived based on the prediction mode;
determining a first weight associated with the first HoG, wherein the first weight associated with the first HoG is determined based on the coding information; and
obtaining a merged histogram of gradients (MHoG), wherein the MHoG is obtained at least by applying the first weight to the first HoG.

9. The method of claim 8, further comprising

determining a second set of blocks, wherein each block of the second set of blocks selects DIMD merge mode for prediction; and
deriving a second HoG, wherein the MHoG is further obtained based on at least the first HoG or the second HoG.

10. The method of claim 9, further comprising predicting the current block based on one or more intra prediction modes obtained based on the MHoG, wherein the first set of blocks and the second set of blocks are neighboring blocks associated with the current block.

11. The method of claim 8, wherein the coding information comprises a coding block Flag (CBF) or a set of coefficients associated with the current block that is obtained from prediction error.

12. The method of claim 8, further comprising deriving a normalized HoG, wherein the normalized HoG is obtained based on normalization information, and wherein the MHoG is further obtained based on the normalized HoG.

13. The method of claim 8, further comprising filtering the first set of blocks according to a distance between a current block and a block in the first set of blocks or according to difference between a size of the current block and a size of the block in the first set of blocks.

14. The method of claim 8, wherein the first HoG is a synthetic HoG and the first weight is a synthetic weight.

15. The video decoding device of claim 1 or the method of claim 8, wherein the first HoG is a synthetic normalized HoG and the first weight is a synthetic weight.

FIG. 1A

116

122

102

120
Transceiver

124
Speaker/
Microphone

134
Power Source

126
Keypad

118
Processor

136
GPS Chipset

128
Display/
Touchpad

138
Peripherals

130
Non-
Removable
Memory

132
Removable
Memory

FIG. 1B

FIG. 1C

EP 4 633 143 A1

FIG. 1D

FIG. 2

EP 4 633 143 A1

FIG. 3

FIG. 4

EP 4 633 143 A1

FIG. 5

gradient filter

$h$ $H$ $W$ $w$

direction of positive
horizontal gradient

direction of positive
vertical gradient

(1)

$G_{HOR}$ and $G_{VER}$
having opposite signs

$|G_{VER}| > |G_{HOR}|$

$G_{HOR}$ and $G_{VER}$
having same sign

(2)

(4)

$G_{HOR}$ and $G_{VER}$
having opposite
signs

(3)

$G_{HOR}$ and $G_{VER}$
having same sign

$|G_{HOR}| \geq |G_{VER}|$

In the framework of ECM using the VVC directional intra prediction modes
- (1) : target intra prediction mode index belonging to $[\![2, 17]\!]$
- (2) : target intra prediction mode index belonging to $[\![19, 33]\!]$
- (3) : target intra prediction mode index belonging to $[\![34, 49]\!]$
- (4) : target intra prediction mode index belonging to $[\![51, 66]\!]$
- if $G_{VER} == 0$, target intra prediction mode is vertical, i.e. its index is 50
- if $G_{HOR} == 0$, target intra prediction mode is horizontal, i.e. its index is 18.

# FIG. 6

FIG. 7

EP 4 633 143 A1

direction of positive
horizontal gradient

direction of positive
vertical gradient

$G_{VER}$

$G$ (1)

$G_{HOR}$

90°

$\theta$

$\theta$

(2)

(4) (3)

direction of the target
intra prediction mode

reference vertical axis

$$\tan(\theta) = \frac{|G_{VER}|}{|G_{HOR}|}$$

FIG. 8

$A_0 = 0$

$A_1 = 2048$

$A_2 = 4096$

(1)

$A_3 = 6144$

reference
horizontal axis

$\theta$

direction of the target
intra prediction mode

$\vdots$

(2)

$A_4 = 8192$

(4)    (3)

$A_5 = 12288$

$A_6 = 16384$

$A_7 = 20480$

$A_8 = 24576$

$i^* = \min_{i} |A_i - \dot{\theta}| = 7$

$A_{16} = 65536$

target intra prediction mode index = 18 + $i^*$ = 25

# FIG. 9

$$i^* = \min_i |A_i - \dot\theta| = 4$$

target intra prediction mode index = 50 - $i^*$ = 46

(1)

(2)

(3)

(4)

$A_{16} = 65536$

$A_2 = 4096$

$A_3 = 6144$

$A_4 = 8192$

$A_0 = 0$

$A_1 = 2048$

$\theta$

reference
vertical axis

direction of the target
intra prediction mode

FIG. 10

FIG. 11

FIG. 12

EP 4 633 143 A1

beginning of the computation of the MHOG of the current $W \times H$ block

2000

collecting the neighboring blocks selecting DIMD or the new DIMD merge mode for intra prediction, being stored in blocksSet

2001

blocksSet

filtering the neighboring blocks in blocksSet according to criteria, yielding blocksSetFiltered

2002

blocksSetFiltered

collecting normalization information normInfo from the current block and blocksSetFiltered

2003

normInfo

from normInfo and blocksSetFiltered, normalizing the HOG of each neighboring block in blocksSetFiltered, giving $\{HOGnorm_1, HOGnorm_2, \dots\}$

2004

$\{HOGnorm_1, HOGnorm_2, \dots\}$

merging the normalized HOGs $\{HOGnorm_1, HOGnorm_2, \dots\}$ into the MHOG of the current block

2005

MHOG

FIG. 13

FIG. 14

beginning of the computation of the MHOG of
the current $W \times H$ block

8000

collecting the non-adjacent blocks selecting DIMD or the new
DIMD merge mode for intra prediction,
being stored in blocksSet

8001

blocksSet

filtering the non-adjacent blocks in blocksSet
according to criteria, yielding blocksSetFiltered

8002

blocksSetFiltered

collecting distance information distInfo from the
current block and blocksSetFiltered

8003

distInfo

from distInfo and blocksSetFiltered, normalizing the
HOG of each non-adjacent block in blocksSetFiltered,
giving $\{\text{HOGnorm}_1, \text{HOGnorm}_2, \dots\}$

8004

$\{\text{HOGnorm}_1, \text{HOGnorm}_2, \dots\}$

merging the normalized HOGs
$\{\text{HOGnorm}_1, \text{HOGnorm}_2, \dots\}$ into the MHOG of the
current block

8005

MHOG

# FIG. 15

FIG. 16

EP 4 633 143 A1

```
beginning of the computation of the
MHOG of the current W × H block
4000

                                              collecting the blocks selecting non-DIMD being stored in
                                              blocksSet2
                                              4011

                                                         │ blocksSet2

collecting the blocks selecting DIMD or the new
DIMD merge mode for intra prediction,
being stored in blocksSet                     filtering the blocks in blocksSet according to criteria,
4001                                          yielding blocksSetFiltered2                              4013
                                              4012
          │ blocksSet                                    │ blocksSetFiltered2

filtering the blocks in blocksSet according to criteria,  collecting coding information codingInfo={predMod,  collecting normalization information normInfo2
yielding blocksSetFiltered                                cbf, …} from blocksSetFiltered2                     from blocksSetFiltered2
4002                                                      4015

          │ blocksSetFiltered                                       │ predMod                                          │ normInfo2

collecting normalization information normInfo             calculating synthetic HoG from predMod of           4016
from the current block and blocksSetFiltered    4003      each block in blocksSetFiltered2, giving
                                                          {syntHOG₁, syntHOG₂, …}
                                      codingInfo
          │ normInfo                 4017                                                                    {syntHOG₁, syntHOG₂, …}          4014

from normInfo and blocksSetFiltered, normalizing the   determining weights from codingInfo for each         from normInfo2, normalizing the synthetic HOG of
HOG of each neighboring block in blocksSetFiltered,    neighboring block in blocksSetFiltered2, giving      each block in blocksSetFiltered2, giving
giving {HOGnorm₁, HOGnorm₂, …}                         {weight_syntHOG₁, weight_syntHOG₂, …}                {syntHOGnorm₁, syntHOGnorm₂, …}
4004

{HOGnorm₁, HOGnorm₂, …}                                {weight_syntHOG₁, weight_syntHOG₂, …}                {syntHOGnorm₁, syntHOGnorm₂, …}

                                   From the weights of each HOGs, blending the normalized HOGs
                                   {HOGnorm₁, HOGnorm₂, syntHOGnorm₁, syntHOGnorm₂ …}
                                   into the MHOG of the current block
                                   4005

                                                  │
                                                MHOG
```

FIG. 17

FIG. 18

collecting the blocks selecting non-DIMD being stored in blocksSet2

10011

blocksSet2

filtering the blocks in blocksSet according to criteria, yielding blocksSetFiltered2

10012

blocksSetFiltered2

collecting coding information codingInfo from blocksSetFiltered2

10015

codingInfo

selecting prediction Mode predMode

10016

$predMode$

10017

From predMode derivation of weight
$\{weight\_syntHOG_1, weight\_syntHOG_2, ...\}$

$\{weight\_syntHOG_1, weight\_syntHOG_2, ...\}$

# FIG. 19

FIG. 20

FIG. 21

```
                    ┌─────────────────────────────────────────┐
                    │ collecting the blocks selecting non-DIMD  │
                    │ being stored in blocksSet2                │
              9011  └─────────────────────────────────────────┘
                                      │ blocksSet2
                                      ▼
                    ┌─────────────────────────────────────────┐
                    │ filtering the blocks in blocksSet         │
                    │ according to criteria, yielding           │
              9012  │ blocksSetFiltered2                        │
                    └─────────────────────────────────────────┘
                                      │ blocksSetFiltered2
                                      ▼
                    ┌─────────────────────────────────────────┐
                    │ collecting coding information codingInfo   │
              9015  │ from blocksSetFiltered2                   │
                    └─────────────────────────────────────────┘
                                      │ codingInfo      9016
                                      ▼
        CBF OFF     ┌─────────────────────────────────────────┐
    ┌───────────────│ selecting coefficients, flags from        │
    │               │ codingInfo: CBF, DCT coefficients,        │
    │               │ last_xy_sig                               │
    │               └─────────────────────────────────────────┘
    │                           │ CBF ON
    │          9017             ▼
    │     ┌──────────────────────────────────┐   ┌──────────────────────────────────┐ 9018
    │     │ From Last_xy_sig, derivation of    │   │ From DCT coefficient, derivation  │
    │     │ weight                             │   │ of weight                         │
    │     │ {weight_syntHOG₁, weight_syntHOG₂,│   │ {weight_syntHOG₁, weight_syntHOG₂,│
    │     │  …}                                │   │  …}                               │
    │     └──────────────────────────────────┘   └──────────────────────────────────┘
    ▼              ▼              │                            ▼
```

$\{weight\_synt\mathrm{HOG}_1, weight\_synt\mathrm{HOG}_2, …\}$

$\{weight\_synt\mathrm{HOG}_1, weight\_synt\mathrm{HOG}_2, …\}$

$\{weight\_synt\mathrm{HOG}_1, weight\_synt\mathrm{HOG}_2, …\}$

$\{weight\_synt\mathrm{HOG}_1, weight\_synt\mathrm{HOG}_2, …\}$

## FIG. 22

49

Europäisches
Patentamt

European
Patent Office

Office européen
des brevets

# EUROPEAN SEARCH REPORT

**Application Number**

EP 24 30 5558

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BLASI (NOKIA) S ET AL: "AHG12: Intra-prediction using Merged Histogram of Gradients", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0078 17 January 2024 (2024-01-17), XP030313927, Retrieved from the Internet: URL:https://jvet-experts.org/doc_end_user/ documents/33_Teleconference/wg11/JVET-AG00 78-v3.zip JVET-AG0078-v3.docx [retrieved on 2024-01-17] * the whole document * & BLASI (NOKIA) S ET AL: "AHG12: Intra-prediction using Merged Histogram of Gradients", 33. JVET MEETING; 20240117 - 20240126; TELECONFERENCE; (THE JOINT VIDEO EXPLORATION TEAM OF ISO/IEC JTC1/SC29/WG11 AND ITU-T SG.16 ), , no. JVET-AG0078 17 January 2024 (2024-01-17), XP030313928, Retrieved from the Internet: URL:https://jvet-experts.org/doc_end_user/ documents/33_Teleconference/wg11/JVET-AG00 78-v3.zip JVET-AG0078.pptx [retrieved on 2024-01-17] * the whole document * ----- -/-- | 1-15 | INV. H04N19/11 H04N19/593 H04N19/105 H04N19/159 H04N19/176 <br><br> TECHNICAL FIELDS SEARCHED (IPC) <br><br> H04N |

The present search report has been drawn up for all claims

| Place of search | Date of completion of the search | Examiner |
|---|---|---|
| The Hague | 31 August 2024 | Wedi, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | COBAN M ET AL: "Algorithm description of Enhanced Compression Model 11 (ECM 11)", 144. MPEG MEETING; 20231016 - 20231020; HANNOVER; (MOTION PICTURE EXPERT GROUP OR ISO/IEC JTC1/SC29/WG11), , no. m65800 ; JVET-AF2025 28 December 2023 (2023-12-28), XP030313758, Retrieved from the Internet: URL:https://dms.mpeg.expert/doc_end_user/d ocuments/144_Hannover/wg11/m65800-JVET-AF2 025-v1-JVET-AF2025.zip JVET-AF2025-v1.docx [retrieved on 2023-12-28] * section 3.1.5 * | 1-15 | |
| A | ABDOLI (ATEME) M ET AL: "Non-CE3: Decoder-side Intra Mode Derivation (DIMD) with prediction fusion using Planar", 15. JVET MEETING; 20190703 - 20190712; GOTHENBURG; (THE JOINT VIDEO EXPLORATION TEAM OF ISO/IEC JTC1/SC29/WG11 AND ITU-T SG.16 ), , no. JVET-O0449 ; m48570 4 July 2019 (2019-07-04), XP030219611, Retrieved from the Internet: URL:http://phenix.int-evry.fr/jvet/doc_end _user/documents/15_Gothenburg/wg11/JVET-O0 449-v2.zip JVET-O0449_v2.docx [retrieved on 2019-07-04] * section 3 * | 6,13 | TECHNICAL FIELDS SEARCHED (IPC) |
| A | EP 4 258 662 A1 (BEIJING XIAOMI MOBILE SOFTWARE CO LTD [CN]) 11 October 2023 (2023-10-11) * abstract * * paragraph [0034] * | 6,13 | |

The present search report has been drawn up for all claims

| Place of search | Date of completion of the search | Examiner |
|---|---|---|
| The Hague | 31 August 2024 | Wedi, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 24 30 5558

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2024

| Patent document cited in search report | | Publication date | Patent family member(s) | | Publication date |
|---|---|---|---|---|---|
| EP 4258662 | A1 | 11-10-2023 | EP | 4258662 A1 | 11-10-2023 |
| | | | WO | 2023193551 A1 | 12-10-2023 |

EPO FORM P0459

For more details about this annex : see Official Journal of the European Patent Office, No. 12/82